(19) Europäisches Patentamt / European Patent Office / Office européen des brevets

(11) EP 4 524 173 A1

(12) **EUROPEAN PATENT APPLICATION**
published in accordance with Art. 153(4) EPC

(43) Date of publication:
**19.03.2025 Bulletin 2025/12**

(21) Application number: **23812169.3**

(22) Date of filing: **25.05.2023**

(51) International Patent Classification (IPC):
***C08G 18/72*** *(2006.01)* ***C08G 18/42*** *(2006.01)*
***C08K 3/22*** *(2006.01)* ***C08K 3/013*** *(2018.01)*
***C08K 5/00*** *(2006.01)* ***H01M 10/653*** *(2014.01)*

(52) Cooperative Patent Classification (CPC):
**C08G 18/42; C08G 18/72; C08K 3/013; C08K 3/22; C08K 5/00; H01M 10/653**

(86) International application number:
**PCT/KR2023/007174**

(87) International publication number:
**WO 2023/229395 (30.11.2023 Gazette 2023/48)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **25.05.2022 KR 20220064080**

(71) Applicant: **LG Chem, Ltd.**
**Yeongdeungpo-gu**
**Seoul 07336 (KR)**

(72) Inventors:
- **JUNG, Je Sik**
  **Daejeon 34122 (KR)**
- **HONG, Sung Bum**
  **Daejeon 34122 (KR)**
- **LEE, Sol Yi**
  **Daejeon 34122 (KR)**
- **SEO, Sang Hyuk**
  **Daejeon 34122 (KR)**
- **KIM, Hye Jin**
  **Daejeon 34122 (KR)**

(74) Representative: **Hoffmann Eitle**
**Patent- und Rechtsanwälte PartmbB**
**Arabellastraße 30**
**81925 München (DE)**

(54) **CURABLE COMPOSITION**

(57) The present application can provide a curable composition being advantageous for lightness in weight by exhibiting a low density, and having excellent keeping stability and storage stability by suppressing a viscosity change over time, and a use thereof. In addition, the curable composition can exhibit excellent blending properties during a manufacturing process, and form a cured product having high thermal conductivity, low specific gravity (density), and relatively high hardness when cured. The present application can also provide a device comprising the curable composition or the cured product thereof.

EP 4 524 173 A1

## Description

### Technical Field

This application claims priority from Korean Patent Application No. 10-2022-0064080 dated May 25, 2022, all the disclosures of which are incorporated herein by reference in its entirety.
The present application relates to a curable composition and an application thereof.

### Background Art

Depending on advancement of ultra-high-speed and microminiaturization technologies, higher power and faster speed are required for devices or machines applied to the technologies. Such high power and fast speed cause more heat to be generated during operation processes, whereby demands for thermally conductive materials having a heat dissipation effect, which can effectively dissipate and/or remove heat, increase.
For example, Patent Document 1 discloses a material blending a thermally conductive filler with a polymer, and such a material is applied to battery modules.
A polyurethane is used as the polymer blended with the thermally conductive filler. A composition forming such a material can be formed by reacting a main part comprising a polyol compound and a curing agent part comprising an isocyanate compound.
However, in such a composition, the isocyanate group of the curing agent part especially exhibits high reactivity with moisture, so that problems such as a viscosity increase over time occur. Therefore, for such a composition, it is necessary to ensure so-called storage stability or keeping stability.
In addition, for heat dissipation performance, a relatively excessive amount of thermally conductive filler is included in such a composition. Usually, an oxide filler such as alumina is used as such a filler. Such a filler has excellent thermal conductivity, but has high specific gravity, so that it becomes an obstacle to making the material lighter.
For example, a hydroxide filler such as aluminum hydroxide has low specific gravity, and thermal conductivity. However, such a filler has thermal conductivity, but its thermal conductivity characteristics are inferior to those of the oxide filler. In addition, the hydroxide filler has a hydroxyl group, where such a hydroxyl group can react with moisture or the isocyanate group of the curing agent. Therefore, if an excessive amount of hydroxide filler is applied, it is difficult to ensure storage stability and keeping stability, blending properties are also lowered, and thermal conductivity is also not stably secured.
In addition, the hydroxide filler has relatively low hardness, so that it is also not suitable for forming materials that require high hardness.

<Prior Art Documents>

<Patent Documents>

(Patent Document 1) Korean Laid-Open Patent Publication No. 10-2021-0042969

## Disclosure

### Technical Problem

The present application provides a curable composition and a use thereof. The present application can provide a curable composition being advantageous for lightness in weight by exhibiting a low density, and having excellent keeping stability and storage stability by suppressing a viscosity change over time, and a use thereof. In addition, the curable composition can exhibit excellent blending properties during a manufacturing process, and form a cured product having high thermal conductivity, low specific gravity (density), and relatively high hardness when cured. The present application is also intended to provide a device comprising the curable composition or the cured product thereof.

### Technical Solution

Among physical properties mentioned in the present application, the physical property that the measurement temperature affects the results is a physical property measured at room temperature, unless specifically stated otherwise.
Among physical properties mentioned in the present application, the physical property that the measurement pressure affects the results is a physical property measured under a normal pressure condition, unless specifically stated otherwise.

Among physical properties mentioned in the present application, the physical property that the measurement humidity affects the results is a physical property measured under a normal humidity condition, unless specifically stated otherwise.

In this specification, the term room temperature means the natural temperature without heating or cooling. For example, the room temperature may be any temperature in a range of 10°C to 30°C, and may mean a temperature of about 23°C or about 25°C or so. The unit of temperature mentioned in this specification is Celsius (°C), unless otherwise specified.

In this specification, the normal pressure means the natural pressure without pressurization or depressurization. For example, the normal pressure may usually mean about 1 atm or so in an atmospheric pressure level.

In this specification, the term normal humidity means the natural humidity that is not particularly adjusted under room temperature and normal pressure conditions. For example, the normal humidity may mean any humidity within a range of about 20 RH% to 80 RH% or 40 to 60 RH% or so. Here, the used unit RH% (Relative Humidity%) is one expressed as a percentage of the current amount of water vapor, if the maximum amount of water vapor that can be contained at a specific temperature is set to 100.

In this specification, the terms weight average molecular weight (Mw) and number average molecular weight (Mn) mean the molecular weights to be measured using GPC (Gel permeation chromatography), and the unit thereof is g/mol. In addition, the term polydispersity index (PDI) as used in this specification is a value (Mw/Mn) obtained by dividing the weight average molecular weight (Mw) by the number average molecular weight (Mn). The number average molecular weight (Mn) and weight average molecular weight (Mw) can be measured after putting a sample in a 20 mL vial, diluting it with THF (tetrahydrofuran) to a concentration of about 20 mg/mL, and then filtering a standard sample for calibration and a sample to be measured through a syringe filter (pore size: 0.2 μm). Agilent technologies' ChemStation can be used as an analysis program, and the number average molecular weight (Mn) and weight average molecular weight (Mw) can be obtained by comparing the elution time of the sample with the calibration curve.

<GPC measurement conditions>

Instrument: Agilent technologies' 1200 series

Column: using Agilent technologies' TL Mix. A&B

Solvent: THF

Column temperature: 40°C

Sample concentration: 20 mg/mL, 10 μl injection

Using MP: 364000, 91450, 17970, 4910, 1300 as standard sample

The term curing as used herein means a phenomenon in which the hardness or viscosity of a material increases through physical reactions and/or chemical reactions.

The term curability as used herein means a material capable of the curing.

In this specification, the term substituent means an atom or atomic group replacing a hydrogen atom present in any compound. In addition, the substituent is described below, but is not limited thereto, and the substituent may be further substituted with the substituent described below or may not be substituted with any substituent, unless otherwise specified herein.

In this specification, unless otherwise described, the term alkyl group may be a linear or branched alkyl group with 1 to 20 carbon atoms, or 1 to 16 carbon atoms, or 1 to 12 carbon atoms, or 1 to 8 carbon atoms, or 1 to 6 carbon atoms, or may be a cyclic alkyl group with 3 to 20 carbon atoms, or 3 to 16 carbon atoms, or 3 to 12 carbon atoms, or 3 to 8 carbon atoms, or 3 to 6 carbon atoms. Here, the cyclic alkyl group also includes an alkyl group having only a ring structure, and an alkyl group containing a ring structure. For example, both a cyclohexyl group and a methyl cyclohexyl group correspond to the cyclic alkyl group. Also, for example, the alkyl group may be exemplified by, specifically, methyl, ethyl, n-propyl, isopropyl, n-butyl, isobutyl, tert-butyl, sec-butyl, 1-methyl-butyl, 1-ethyl-butyl, n-pentyl, isopentyl, neopentyl, tert-pentyl, n-hexyl, 1-methylpentyl, 2-methylpentyl, 4-methyl-2-pentyl, 3,3-dimethylbutyl, 2-ethylbutyl, n-heptyl, 1-methylhexyl, n-octyl, tert-octyl, 1-methylheptyl, 2-ethylhexyl, 2-propylpentyl, n-nonyl, 2,2-dimethylheptyl, 1-ethylpropyl, 1,1-dimethylpropyl, isohexyl, 2-methylpentyl, 4-methylhexyl, 5-methylhexyl, and the like, but is not limited to these. In addition, the cycloalkyl group or cycloalkylene group may be exemplified by, specifically, cyclopropyl, cyclobutyl, cyclopentyl, 3-methylcyclopentyl, 2,3-dimethylcyclopentyl, cyclohexyl, 3-methylcyclohexyl, 4-methylcyclohexyl, 2,3-dimethylcyclohexyl, 3,4,5-trimethylcyclohexyl, 4-tert-butylcyclohexyl, cycloheptyl, cyclooctyl, and the like, but is not limited thereto.

In this specification, the term alkenyl group or alkenylene group may be a linear or branched acyclic alkenyl group or alkenylene group with 2 to 20 carbon atoms, or 2 to 16 carbon atoms, or 2 to 12 carbon atoms, or 2 to 8 carbon atoms, or 2 to 6 carbon atoms; or a cyclic alkenyl group or alkenylene group with 3 to 20 carbon atoms, or 3 to 16 carbon atoms, or 3 to 12 carbon atoms, or 3 to 8 carbon atoms, or 3 to 6 carbon atoms, unless otherwise described. Here, when an alkenyl group or alkenylene group with a ring structure is included, it corresponds to a cyclic alkenyl group or alkenylene group. Also, for example, it may be exemplified by ethenyl(ene), n-propenyl(ene), isopropenyl(ene), n-butenyl(ene), isobutenyl(ene), tert-butenyl(ene), sec-butenyl(ene), 1-methyl-butenyl(ene), 1-ethyl-butenyl(ene), n-pentenyl(ene), isopentenyl(ene), neopentenyl(ene), tert-pentenyl(ene), n-hexenyl(ene), 1-methylpentenyl(ene), 2-methylpentenyl(ene), 4-methyl-2-pentenyl(ene), 3,3-dimethylbutenyl(ene), 2-ethylbutenyl(ene), n-heptenyl(ene), 1-methylhexenyl(ene), n-octenyl(ene), tert-octenyl(ene), 1-methylheptenyl(ene), 2-ethylhexenyl(ene), 2-propylpentenyl(ene), n-nonylenenyl(ene), 2,2-dimethylheptenyl(ene), 1-ethylpropenyl(ene), 1,1-dimethylpropenyl(ene), isohexenyl(ene), 2-methylpentenyl(ene), 4-methylhexenyl(ene), 5-methylhexenyl(ene), and the like, but is not limited thereto. In addition, the cycloalkenyl group or cycloalkenylene group may be exemplified by, specifically, cyclopropenyl(ene), cyclobutenyl(ene), cyclopentenyl(ene), 3-methylcyclopentenyl(ene), 2,3-dimethylcyclopentenyl(ene), cyclohexenyl(ene), 3-methylcyclohexenyl(ene), 4-methylcyclohexenyl(ene), 2,3-dimethylcyclohexenyl(ene), 3,4,5-trimethylcyclohexenyl(ene), 4-tert-butylcyclohexenyl(ene), cycloheptenyl(ene), cyclooctenyl(ene), and the like, but is not limited thereto.

In this specification, the term alkynyl group or alkynylene group may be a linear or branched acyclic alkynyl group or alkynylene group with 2 to 20 carbon atoms, or 2 to 16 carbon atoms, or 2 to 12 carbon atoms, or 2 to 8 carbon atoms, or 2 to 6 carbon atoms, or may be a cyclic alkynyl group or alkynylene group with 3 to 20 carbon atoms, or 3 to 16 carbon atoms, or 3 to 12 carbon atoms, or 3 to 8 carbon atoms, or 3 to 6 carbon atoms, unless otherwise described. Here, when an alkynyl group or alkynylene group with a ring structure is included, it corresponds to a cyclic alkynyl group or alkynylene group. Also, for example, it may be exemplified by ethynyl(ene), n-propynyl(ene), isopropynyl(ene), n-butynyl(ene), isobutynyl(ene), tert-butynyl(ene), sec-butynyl(ene), 1-methyl-butynyl(ene), 1-ethyl-butynyl(ene), n-pentynyl(ene), isopentynyl(ene), neopentynyl(ene), tert-pentynyl(ene), n-hexynyl(ene), 1-methylpentynyl(ene), 2-methylpentynyl(ene), 4-methyl-2-pentynyl(ene), 3,3-dimethylbutynyl(ene), 2-ethylbutynyl(ene), n-heptynyl(ene), 1-methylhexynyl(ene), n-octynyl(ene), tert-octynyl(ene), 1-methylheptynyl(ene), 2-ethylhexynyl(ene), 2-propylpentynyl(ene), n-nonynyl(ene), 2,2-dimethylheptynyl(ene), 1-ethylpropynyl(ene), 1,1-dimethylpropynyl(ene), isohexynyl(ene), 2-methylpentynyl(ene), 4-methylhexynyl(ene), 5-methylhexynyl(ene), and the like, but is not limited thereto. In addition, the cycloalkynyl group or cycloalkynylene group may be exemplified by, specifically, cyclopropynyl(ene), cyclobutynyl(ene), cyclopentynyl(ene), 3-methylcyclopentynyl(ene), 2,3-dimethylcyclopentynyl(ene), cyclohexynyl(ene), 3-methylcyclohexynyl(ene), 4-methylcyclohexynyl(ene), 2,3-dimethylcyclohexynyl(ene), 3, 4,5-trimethylcyclohexynyl(ene), 4-tert-butylcyclohexynyl(ene), cycloheptynyl(ene), cyclooctynyl(ene), and the like, but is not limited thereto.

In this specification, the term alkoxy group may mean a linear or branched alkoxy group with 1 to 20 carbon atoms, or 1 to 16 carbon atoms, or 1 to 12 carbon atoms, or 1 to 8 carbon atoms, or 1 to 6 carbon atoms, or 1 to 4 carbon atoms, or may mean a cyclic alkoxy group with 3 to 20 carbon atoms, or 3 to 16 carbon atoms, or 3 to 12 carbon atoms, or 3 to 8 carbon atoms, or 3 to 6 carbon atoms, unless otherwise specified.

In this specification, the terms alkylidene group and alkylene group both mean a divalent residue formed by removing two hydrogen atoms from an alkane. However, the alkylidene group means a divalent residue formed by removing two hydrogen atoms from one carbon atom of an alkane, and the alkylene group means a divalent residue formed by removing one hydrogen atom from each of two different carbon atoms of an alkane.

In this specification, the term alkylidene group may mean a linear or branched alkylidene group with 1 to 20 carbon atoms, or 1 to 16 carbon atoms, or 1 to 12 carbon atoms, or 1 to 8 carbon atoms, or 1 to 6 carbon atoms, or 1 to 4 carbon atoms, or may mean a cyclic alkylidene group with 3 to 20 carbon atoms, or 3 to 16 carbon atoms, or 3 to 12 carbon atoms, or 3 to 8 carbon atoms, or 3 to 6 carbon atoms, unless otherwise specified.

In this specification, the term alkylene group may mean a linear or branched alkylene group with 2 to 20 carbon atoms, or 2 to 16 carbon atoms, or 2 to 12 carbon atoms, or 2 to 8 carbon atoms, or 2 to 6 carbon atoms, or 2 to 4 carbon atoms, or may mean a cyclic alkylene group with 3 to 20 carbon atoms, or 3 to 16 carbon atoms, or 3 to 12 carbon atoms, or 3 to 8 carbon atoms, or 3 to 6 carbon atoms, unless otherwise specified.

The alkyl group, alkylene group, alkoxy group, alkylidene group, alkenyl group, alkenylene group, alkynyl group, and alkynylene group may also be optionally substituted with one or more substituents. **In** this case, the substituent may be one or more selected from the group consisting of halogen (chlorine (Cl), iodine (I), bromine (Br), fluorine (F)), an aryl group, a heteroaryl group, an epoxy group, an alkoxy group, a cyano group, a carboxyl group, an acryloyl group, a methacryloyl group, an acryloyloxy group, a methacryloyloxy group, a carbonyl group, and a hydroxy group, but is not limited thereto.

**In** this specification, the term aryl group means an aromatic ring in which one hydrogen is removed from an aromatic hydrocarbon ring, where the aromatic hydrocarbon ring may include a monocyclic or polycyclic ring. The aryl

group does not have a particularly limited number of carbon atoms, but may be an aryl group with 6 to 30 carbon atoms, or 6 to 26 carbon atoms, or 6 to 22 carbon atoms, or 6 to 20 carbon atoms, or 6 to 18 carbon atoms, or 6 to 15 carbon atoms, unless otherwise described. Also, in this specification, the term arylene group means that the aryl group has two bonding positions, that is, a divalent group. The description of the aryl group as described above may be applied, except that these are each a divalent group. The aryl group may be exemplified by, for example, a phenyl group, a phenylethyl group, a phenylpropyl group, a benzyl group, a tolyl group, a xylyl group or a naphthyl group, and the like, but is not limited thereto.

**In** this specification, the term heteroaryl group is an aromatic ring containing one or more heteroatoms other than carbon, which may contain, specifically, one or more heteroatoms selected from the group consisting of nitrogen (N), oxygen (O), sulfur (S), selenium (Se) and tellurium (Te). In this case, the atoms constituting the ring structure of the heteroaryl group may be referred to as ring atoms. In addition, the heteroaryl group may include a monocyclic or polycyclic ring. The heteroaryl group does not have a particularly limited number of carbon atoms, but may be a heteroaryl group with 2 to 30 carbon atoms, or 2 to 26 carbon atoms, or 2 to 22 carbon atoms, or 2 to 22 carbon atoms, or 2 to 20 carbon atoms, or 2 to 18 carbon atoms, or 2 to 15 carbon atoms, unless otherwise described. In another example, the heteroaryl group does not have a particularly limited number of ring atoms, but may be a heteroaryl group with 5 to 30, 5 to 25, 5 to 20, 5 to 15, 5 to 10, or 5 to 8 ring atoms. The heteroaryl group may be exemplified by, for example, a thiophene group, a furan group, a pyrrole group, an imidazolyl group, a thiazolyl group, an oxazolyl group, an oxadiazolyl group, a triazolyl group, a pyridyl group, a bipyridyl group, a pyrimidyl group, a triazinyl group, an acridyl group, a pyridazinyl group, a pyrazinyl group, a quinolinyl group, a quinazolinyl group, a quinoxalinyl group, a phthalazinyl group, a pyridopyrimidinyl group, a pyridopyrazinyl group, a pyrazinopyrazinyl group, an isoquinolinyl group, an indole group, a carbazolyl group, a benzoxazolyl group, a benzimidazolyl group, a benzothiazolyl group, a benzocarbazolyl group, a dibenzocarbazolyl group, a benzothiophene group, a dibenzothiophene group, a benzofuran group, a dibenzofuran group, a benzosilol group, a dibenzosilol group, a phenanthrolinyl group, an isoxazolyl group, a thiadiazolyl group, a phenothiazinyl group, a phenoxazine group and condensed structures thereof, and the like, but is not limited thereto.

In this specification, the term heteroarylene group means that the heteroaryl group has two bonding positions, that is, a divalent group. The description of the heteroaryl group as described above may be applied, except that these are each a divalent group.

The aryl group, arylene group, heteroarylene group, or heteroaryl group may also be optionally substituted with one or more substituents. In this case, the substituent may be one or more selected from the group consisting of halogen (chlorine (Cl), iodine (I), bromine (Br), fluorine (F)), an aryl group, a heteroaryl group, an epoxy group, an alkoxy group, a cyano group, a carboxyl group, an acryloyl group, a methacryloyl group, an acryloyloxy group, a methacryloyloxy group, a carbonyl group, and a hydroxy group, but is not limited thereto.

In this specification, the term amine group means a functional group in which two hydrogen atoms or substituents are bonded to a nitrogen atom having unshared electron pairs. The amine group can be classified into a primary amine group in which two hydrogen atoms are bonded to a nitrogen atom having unshared electron pairs, a secondary amine group in which one hydrogen atom and one substituent are bonded to a nitrogen atom having unshared electron pairs, and a tertiary amine group in which two substituents are bonded to a nitrogen atom having unshared electron pairs. At this time, the substituent may be one or more selected from the group consisting of an alkyl group, an alkenyl group, an alkynyl group, a halogen (chlorine (Cl), iodine (I), bromine (Br), and fluorine (F)), an aryl group, a heteroaryl group, an epoxy group, an alkoxy group, a cyano group, a carboxyl group, an acryloyl group, a methacryloyl group, an acryloyloxy group, a methacryloyloxy group, a carbonyl group, and a hydroxy group, but is not limited thereto.

The curable composition may comprise an isocyanate compound, a filler component, and a plasticizer.

In this specification, the term curable composition means a composition that the curing can be performed. The curable composition may include components commonly known as polymers as well as components that can be converted to polymers through physical or chemical reactions such as curing or polymerization reactions. The curable composition may have so-called adhesive performance and/or pressure-sensitive adhesive performance before or after curing.

The curable composition may be a solvent-based curable composition, a water-based curable composition, or a solventless curable composition. Also, the curable composition may be an active energy ray (e.g., ultraviolet ray) curing type, a moisture curing type, a thermosetting type, or a room temperature curing type. When the curable composition is an active energy ray curing type, the curing of the curable composition may be performed by irradiation of active energy rays such as ultraviolet rays; in the case of a moisture curing type, the curing of the curable composition may be performed by a method of maintaining it under appropriate moisture; in the case of a thermosetting type, the curing of the curable composition may be performed by a method of applying appropriate heat; or in the case of a room temperature curing type, the curing of the curable composition may be performed by a method of maintaining the curable composition at room temperature.

The curable composition according to one example of the present application may be a one-component curable composition or a two-component curable composition, and in some cases, it may be any part of the two-component curable composition.

As is known, the term one-component curable composition as used in the present application means a composition in which all the components necessary for curing exist in a mixed state and are cured when certain conditions (for example, specific temperature or ultraviolet irradiation, etc.) are satisfied. In addition, the term two-component curable composition as used in the present application means a composition in which the components necessary for curing exist in a physically separated state (e.g., separation into a main part and a curing agent part), and the separated components are mixed, and exposed to a curable environment to be cured.

The curable composition according to one example of the present application may comprise an isocyanate compound, as described above. **In** this specification, the term isocyanate compound may mean a compound having one or more isocyanate groups. **In** this specification, the term diisocyanate compound may mean a compound having two or more isocyanate groups. **In** this specification, the term polyisocyanate compound may mean a compound having three or more isocyanate groups. The lower limit of the number of isocyanate groups in the polyisocyanate compound may be 3, and the upper limit thereof may be 10, 9, 8, 7, 6, 5, 4, or 3. The number of isocyanate groups may be within a range of more than or equal to, or more than any one of the above-described lower limits; within a range of less than or equal to, or less than any one of the above-described upper limits; or within a range of less than or equal to, or less than any one of the above-described upper limits while being more than or equal to, or more than any one of the above-described lower limits.

The isocyanate compound is not particularly limited, where those commonly used in the industry (for example, those commonly used for forming the polyurethane) may be used. For example, as the diisocyanate compounds, an aromatic diisocyanate compound such as tolylene diisocyanate, diphenylmethane diisocyanate, phenylene diisocyanate, polyethylene phenylene polyisocyanate, xylene diisocyanate, tetramethylxylene diisocyanate, trizine diisocyanate, naphthalene diisocyanate and /or triphenylmethane triisocyanate; and/or an aliphatic diisocyanate compound including a chain diisocyanate compound such as hexamethylene diisocyanate, trimethylhexamethylene diisocyanate, lysine diisocyanate, methyl norbornane diisocyanate, ethylene diisocyanate, propylene diisocyanate and/or tetramethylene diisocyanate, and an alicyclic diisocyanate compound such as transcyclohexane-1,4-diisocyanate, isoborone diisocyanate, bis(isocyanatemethyl)cyclohexane diisocyanate and/or dicyclohexylmethane diisocyanate, and the like may be used. As the diisocyanate compound, one or a mixture of two or more of the above-described types may be used.

As the polyisocyanate compound, one or more selected from the group consisting of isocyanates in the form that one or two or more of the above-described diisocyanate compounds are added to a polyol compound, multimeric complexes of the diisocyanate compounds, and biuret compounds thereof may be used. For example, an aromatic polyisocyanate compound, which is an adduct of the aromatic diisocyanate compound to the polyol, the multimeric complex or biuret compound; and/or an aliphatic polyisocyanate compound, which is an adduct of an aliphatic diisocyanate compound to the polyol, the multimeric complex and/or biuret compound, and the like may be used. As the polyisocyanate compound, one or a mixture of two or more of the above-described types may be used.

In the curable composition according to one example of the present application, an aliphatic isocyanate compound may be used as the isocyanate compound. The isocyanate compound of the curable composition may not include an aromatic isocyanate compound, and may include only an aliphatic isocyanate compound. By using only an aliphatic isocyanate compound as the isocyanate compound, it can be advantageous in securing physical properties having little viscosity change due to changes over time while having excellent blending properties when it has blended with a filler component to be described below.

The isocyanate compound of the curable composition according to one example of the present application may comprise a diisocyanate compound and a polyisocyanate compound. When the diisocyanate compound and the polyisocyanate compound are mixed in an appropriate ratio and used, it can be advantageous in securing physical properties physical properties having little viscosity change due to changes over time while having excellent blending properties when it has blended with a filler component to be described below. Here, the diisocyanate compound may be an aliphatic diisocyanate compound, and the polyisocyanate compound may be an aliphatic polyisocyanate compound. Through this combination, it can be advantageous in securing physical properties having little viscosity change due to changes over time while having excellent blending properties when it has blended with a filler component to be described below. In this specification, the term aliphatic diisocyanate compound may mean a diisocyanate compound without containing any aromatic functional group in its molecular structure, and the term aliphatic polyisocyanate compound may mean a polyisocyanate compound without containing any aromatic functional group in its molecular structure. Examples of the aliphatic diisocyanate compound and the aliphatic polyisocyanate compound are as described above.

The lower limit of the molecular weight or weight average molecular weight of the diisocyanate compound included in the isocyanate compound of the curable composition according to one example of the present application may be 100 g/mol, 110 g/mol, 120 g/mol, 130 g/mol, 140 g/mol, 150 g/mol, 160 g/mol, or 170 g/mol or so, and the upper limit thereof may be 300 g/mol, 280 g/mol, 260 g/mol, 240 g/mol, 220 g/mol, 200 g/mol, or 180 g/mol or so. The molecular weight or weight average molecular weight may be within a range of more than or equal to, or more than any one of the above-described lower limits; within a range of less than or equal to, or less than any one of the above-described upper limits; or within a range of less than or equal to, or less than any one of the above-described upper limits while being more than or equal to, or more than any one of the above-described lower limits.

**In** addition, the lower limit of the molecular weight or weight average molecular weight of the polyisocyanate compound included in the curable composition according to one example of the present application may be 600 g/mol, 620 g/mol, 640 g/mol, 660 g/mol, 680 g/mol, 700 g/mol, 720 g/mol, 740 g/mol, 760 g/mol, 780 g/mol, or 800 g/mol or so, and the upper limit thereof may be 1,000 g/mol, 980 g/mol, 960 g/mol, 940 g/mol, 920 g/mol, 900 g/mol, 880 g/mol, 860 g/mol, or 840 g/mol or so. The molecular weight or weight average molecular weight may be within a range of more than or equal to, or more than any one of the above-described lower limits; within a range of less than or equal to, or less than any one of the above-described upper limits; or within a range of less than or equal to, or less than any one of the above-described upper limits while being more than or equal to, or more than any one of the above-described lower limits. It can be advantageous in securing physical properties having little viscosity change due to changes over time while having excellent blending properties when such components have blended with a filler component to be described below. Here, the molecular weight or weight average molecular weight can be measured by the above-described GPC.

When the isocyanate compound simultaneously contains the diisocyanate compound and the polyisocyanate compound, the lower limit of the weight ratio of the polyisocyanate compound relative to 100 parts by weight of the diisocyanate compound may be 1 part by weight, 10 parts by weight, 20 parts by weight, 30 parts by weight, 40 parts by weight, 50 parts by weight, 60 parts by weight, 70 parts by weight, 80 parts by weight, 90 parts by weight, or 100 parts by weight or so, and the upper limit thereof may be 1000 parts by weight, 900 parts by weight, 800 parts by weight, 700 parts by weight, 600 parts by weight, 500 parts by weight, 400 parts by weight, 300 parts by weight, 200 parts by weight, 150 parts by weight, or 100 parts by weight or so. The weight ratio may be within a range of more than or equal to, or more than any one of the above-described lower limits; within a range of less than or equal to, or less than any one of the above-described upper limits; or within a range of less than or equal to, or less than any one of the above-described upper limits while being more than or equal to, or more than any one of the above-described lower limits.

The curable composition according to one example of the present application may comprise a filler component, as described above. Through the filler component, thixotropy can be secured and/or heat dissipation (thermal conductivity) within the battery module or battery pack can be secured as needed during the process. The term filler component means a component consisting only of fillers.

The lower limit of the weight ratio of the filler component in the curable composition according to one example of the present application may be 70 weight%, 70 weight%, 71 weight%, 72 weight%, 73 weight%, 74 weight%, 75 weight%, 76 weight%, 77 weight%, 78 weight%, 79 weight%, 80 weight%, 81 weight%, 82 weight%, 83 weight%, 84 weight%, 85 weight%, 86 weight%, or 87 weight% or so, and the upper limit thereof may be 99 weight%, 98 weight%, 97 weight%, 96 weight%, 95 weight%, 94 weight%, 93 weight%, 92 weight%, 91 weight%, 90 weight%, 89 weight%, 88 weight%, or 87 weight% or so. The weight ratio may be within a range of more than or equal to, or more than any one of the above-described lower limits; within a range of less than or equal to, or less than any one of the above-described upper limits; or within a range of less than or equal to, or less than any one of the above-described upper limits while being more than or equal to, or more than any one of the above-described lower limits.

The filler component of the curable composition according to one example of the present application may comprise a thermally conductive filler, or may be a thermally conductive filler component. The term thermally conductive filler component or thermally conductive filler means a filler component or filler when the curable composition or its cured product exhibits thermal conductivity to be described below through the relevant filler. The thermal conductivity of such a filler or filler component may be, for example, about 1 W/m·K or more, about 5 W/m·K or more, about 10 W/m·K or more, or about 15 W/m·K or more, or may be about 400 W/m·K or less, about 350 W/m·K or less, or about 300 W/m·K or less or so.

The thermally conductive filler may include an oxide filler such as aluminum oxide (alumina), magnesium oxide, beryllium oxide, or titanium oxide; a nitride filler such as boron nitride, silicon nitride, or aluminum nitride; a carbide filler such as silicon carbide; a hydroxide filler such as aluminum hydroxide or magnesium hydroxide; a metal filler such as copper, silver, iron, aluminum, or nickel; a metal alloy filler such as titanium; or silicon powder such as quartz, glass, or silica, and the like, but is not limited thereto. In addition, considering securing insulating properties, the application of a carbon filler such as graphite or activated carbon may also be considered.

The filler component of the curable composition according to one example of the present application may use one or two or more appropriately selected as needed, and the form or ratio is not particularly limited, which may be selected considering the viscosity of the curable composition, possibility of settling in the cured product, desired thermal resistance or thermal conductivity, insulation, a filling effect, or dispersibility, and the like. In addition, even if the same type of fillers is used, a mixture of fillers with different shapes may be used, and a mixture of those with different average particle diameters may be used. For example, a mixture of aluminum hydroxide, aluminum, and alumina may be used, where their respective shapes and average particle diameters may be different from each other.

In this specification, the term average particle diameter is a so-called D50 particle diameter (median particle diameter), which may mean the particle diameter at 50% of the cumulative volume basis of the particle size distribution. That is, the particle size distribution may be obtained based on volume, and the average particle diameter may be regarded as the particle diameter at the point where the cumulative value is 50% in a cumulative curve that the total volume is set to 100%. Such a D50 particle diameter may be measured by a laser diffraction method.

Meanwhile, the shape of the filler included in the filler component of the curable composition according to one example of the present application may be appropriately selected from a spherical shape and/or a non-spherical shape (for example, rectangular shape and needle shape, etc.), and used as needed, but is not limited thereto. In this specification, the term spherical filler means a filler with a sphericity degree of about 0.9 or more, or 0.95 or more, and the non-spherical or rectangular filler means a filler with a sphericity degree of less than 0.95, or less than 0.9. The sphericity degree can be confirmed through a particle shape analysis of the filler. Specifically, the sphericity degree of a filler, which is a three-dimensional particle, may be defined as a ratio (S'/S) of the surface area (S') of a sphere having the same volume of the filler to the surface area (S) of the filler. For real fillers, a circularity degree is generally used. The circularity degree is expressed as a ratio of the boundary of a circle having the same image and the same area (A) as a two-dimensional image of a real filler thus obtained to the boundary (P) of the image, which is obtained by the following equation.

<Circularity degree equation>

$$\text{Circularity degree} = 4\pi A/P^2$$

The circularity degree is expressed as a value from 0 to 1, where a perfect circle has a value of 1, and as a particle has an irregular shape, it has a value lower than 1. The sphericity value in the present application was taken as an average value of circularity degree measured with Marvern's particle shape analysis equipment (FPIA-3000).

The filler component of the curable composition according to one example of the present application may essentially comprise a hydroxide filler to achieve the purpose. Such a filler is advantageous in terms of weight reduction because it is a relatively low specific gravity filler. For example, the lower limit of the weight ratio of the hydroxide filler based on the total weight of the filler component may be 30 weight%, 32 weight%, 34 weight%, 36 weight%, 38 weight%, 40 weight%, 42 weight%, 44 weight%, 46 weight%, 48 weight%, 50 weight%, 52 weight%, 54 weight%, 56 weight%, 58 weight%, or 60 weight% or so, and the upper limit thereof may be 80 weight%, 78 weight%, 76 weight%, 74 weight%, 72 weight%, 70 weight%, 68 weight%, 66 weight%, 64 weight%, or 62 weight% or so. The weight ratio may be within a range of more than or equal to, or more than any one of the above-described lower limits; within a range of less than or equal to, or less than any one of the above-described upper limits; or within a range of less than or equal to, or less than any one of the above-described upper limits while being more than or equal to, or more than any one of the above-described lower limits.

The upper limit of the specific gravity of the hydroxide filler at room temperature may be 3, 2.9, 2.8, 2.7, 2.6, or 2.5 or so, and the lower limit thereof may be 1 or so. The specific gravity may be within a range of more than or equal to, or more than any one of the above-described lower limits; within a range of less than or equal to, or less than any one of the above-described upper limits; or within a range of less than or equal to, or less than any one of the above-described upper limits while being more than or equal to, or more than any one of the above-described lower limits.

As the filler component comprises the hydroxide filler having the above-described specific gravity range in the content ratio range, it is possible to ensure low density characteristics as well as excellent blending properties. The hydroxide filler may be a thermally conductive filler, examples of which are as described above.

The filler component of the curable composition according to one example of the present application may comprise as the hydroxide fillers a first hydroxide filler and a second hydroxide filler which have different average particle diameters. For example, the lower limit of the average particle diameter of the first hydroxide filler may be 60 μm, 61 μm, 62 μm, 63 μm, 64 μm, 65 μm, 66 μm, 67 μm, 68 μm, 69 μm, or 70 μm or so, and the upper limit thereof may be 200 μm, 190 μm, 180 μm, 170 μm, 160 μm, or 150 μm or so. The average particle diameter may be within a range of more than or equal to, or more than any one of the above-described lower limits; within a range of less than or equal to, or less than any one of the above-described upper limits; or within a range of less than or equal to, or less than any one of the above-described upper limits while being more than or equal to, or more than any one of the above-described lower limits. Also, the upper limit of the average particle diameter of the second hydroxide filler may be 10 μm, 9 μm, 8 μm, 7 μm, 6 μm, 5 μm, 4 μm, 3 μm, or 2 μm or so, and the lower limit thereof may be 0.01 μm, 0.05 μm, 0.1 μm, or 0.5 μm or so. The average particle diameter may be within a range of more than or equal to, or more than any one of the above-described lower limits; within a range of less than or equal to, or less than any one of the above-described upper limits; or within a range of less than or equal to, or less than any one of the above-described upper limits while being more than or equal to, or more than any one of the above-described lower limits. As the filler component of the curable composition comprises two hydroxide fillers having different average particle diameters as described above, it is possible to secure excellent blending properties. In one example, the first hydroxide filler may be a filler with the largest average particle diameter among all hydroxide fillers included in the filler component, and the second hydroxide filler may be a filler with the smallest average particle diameter among all hydroxide fillers included in the filler component.

The filler component of the curable composition according to one example of the present application may

comprise the first hydroxide filler and the second hydroxide filler as the hydroxide fillers, and the lower limit of the weight ratio (HF1/HF2) of the first hydroxide filler (HF1) and the second hydroxide filler (HF2) may be 0.1, 0.2, 0.3, 0.4, 0.5, 0.6, 0.7, 0.8, 0.9, 1, 1.1, 1.2, 1.3, 1.4, 1.5, 1.6, 1.7, 1.8, 1.9, or 2 or so, and the upper limit thereof may be 10, 9.5, 9, 8.5, 8, 7.5, 7, 6.5, 6, 5.5, 5, 4.5, 4, 3.5, 3, 2.5, or 2 or so. The weight ratio may be within a range of more than or equal to, or more than any one of the above-described lower limits; within a range of less than or equal to, or less than any one of the above-described upper limits; or within a range of less than or equal to, or less than any one of the above-described upper limits while being more than or equal to, or more than any one of the above-described lower limits. As the filler component of the curable composition comprises two hydroxide fillers with different average particle diameters in the above weight ratio, it is possible to ensure excellent blending properties.

The filler component of the curable composition according to one example of the present application may comprise the first hydroxide filler and the second hydroxide filler as the hydroxide fillers, and the lower limit of the average particle diameter ratio (DHF1/DHF2) of the first hydroxide filler (DHF1) and the second hydroxide filler (DHF2) may be 10, 11, 12, 13, 14, 15, 16, 17, 18, 19, 20, 21, 22, 23, 24, 25, 26, 27, 28, 29, or 30 or so, and the upper limit thereof may be 100, 95, 90, 85, 80, 75, 70, 65, 60, 55, 50, 49, 48, 47, 46, 45, 44, 43, 42, 41, 40, 39, 38, 37, 36, or 35 or so. The ratio may be within a range of more than or equal to, or more than any one of the above-described lower limits; within a range of less than or equal to, or less than any one of the above-described upper limits; or within a range of less than or equal to, or less than any one of the above-described upper limits while being more than or equal to, or more than any one of the above-described lower limits. As the filler component of the curable composition comprises two hydroxide fillers with different average particle diameters in the above average particle diameter ratio, it is possible to ensure excellent blending properties.

The filler component of the curable composition according to one example of the present application may further comprise a non-hydroxide filler (or may also be called an additional filler) together with the hydroxide fillers to achieve the purpose. The term non-hydroxide filler means a filler that is not a hydroxide. As the additional filler, one or more selected from the group consisting of an oxide filler, a nitride filler, a carbide filler, a metal filler, an alloy filler, silicon powder, and a carbon filler may be used, the specific types of which are as described above.

In one example, the lower limit of the content of the non-hydroxide filler in the filler component relative to 100 parts by weight of the hydroxide filler may be 10 parts by weight, 15 parts by weight, 20 parts by weight, 25 parts by weight, 30 parts by weight, 35 parts by weight, 40 parts by weight, 45 parts by weight, 50 parts by weight, 55 parts by weight, 60 parts by weight, or 65 parts by weight or so, and the upper limit thereof may be 200 parts by weight, 190 parts by weight, 180 parts by weight, 170 parts by weight, 160 parts by weight, 150 parts by weight, 140 parts by weight, 130 parts by weight, 120 parts by weight, 110 parts by weight, 100 parts by weight, 90 parts by weight, 80 parts by weight, or 70 parts by weight or so. The ratio may be within a range of more than or equal to, or more than any one of the above-described lower limits; within a range of less than or equal to, or less than any one of the above-described upper limits; or within a range of less than or equal to, or less than any one of the above-described upper limits while being more than or equal to, or more than any one of the above-described lower limits.

The lower limit of the room temperature specific gravity of the non-hydroxide filler may be 3, 3.1, 3.2, 3.3, 3.4, 3.5, 3.6, 3.7, 3.8, or 3.9 or so, and the upper limit thereof may be 10 or so. The specific gravity may be within a range of more than or equal to, or more than any one of the above-described lower limits; within a range of less than or equal to, or less than any one of the above-described upper limits; or within a range of less than or equal to, or less than any one of the above-described upper limits while being more than or equal to, or more than any one of the above-described lower limits. As the filler component comprises the additional filler in the above content ratio range, it is possible to secure thixotropy, hardness viscosity, and thermal conductivity properties suitable for the process. The additional filler may be a thermally conductive filler, examples of which are as described above.

The filler component of the curable composition according to one example of the present application may further comprise an additional filler together with the hydroxide filler simultaneously to achieve the purpose, and the additional filler may be one or more selected from the group consisting of an oxide filler, a nitride filler, a carbide filler, a metal filler, an alloy filler, silicon powder, and a carbon filler, and when included, the additional filler may have an average particle diameter in a range of 10 $\mu$m to 60 $\mu$m. For example, the lower limit of the weight ratio (HF1/AF) of the first hydroxide filler (HF1) and the additional filler (AF) in the filler component may be 0.5, 0.6, 0.7, 0.8, 0.9, or 1 or so, and the upper limit thereof may be 20, 18, 16, 14, 12, 10, 8, 6, 4, 2, 1.5, or 1 or so. The ratio may be within a range of more than or equal to, or more than any one of the above-described lower limits; within a range of less than or equal to, or less than any one of the above-described upper limits; or within a range of less than or equal to, or less than any one of the above-described upper limits while being more than or equal to, or more than any one of the above-described lower limits. As the filler component further includes an additional filler having the average particle diameter, and simultaneously the weight ratio with the first hydroxide filler satisfies the above range, it is possible to ensure thixotropy, viscosity, and thermal conductivity properties suitable for the process. In addition, the lower limit of the average particle diameter ratio (DHF1/DAF) of the first hydroxide filler (DHF1) and the additional filler (DAF) in the filler component may be 1, 1.2, 1.4, 1.6, 1.8, 2, 2.2, 2.4, 2.6, 2.8, 3, 3.2, or 3.4 or so, and the upper limit thereof may be 5, 4.8, 4.6, 4.4, 4.2, 4, 3.8, or 3.6 or so. The ratio may be within a range of more than or equal to, or more than any one of the above-described lower limits; within a range of less than or equal to, or less than any one of

the above-described upper limits; or within a range of less than or equal to, or less than any one of the above-described upper limits while being more than or equal to, or more than any one of the above-described lower limits. As the filler component further comprises the additional filler having the above average particle diameter, and simultaneously the average particle diameter ratio with the first hydroxide filler satisfies the above range, it is possible to ensure thixotropy, viscosity, and thermal conductivity properties suitable for the process.

In one example, when the filler component comprises the hydroxide filler (DHF) and the addition filler (DAF), the lower limit of the ratio (A/B) of the average particle diameter (A) of the hydroxide filler (DHF) to the average particle diameter (B) of the addition filler may be 1, 1.2, 1.4, 1.6, 1.8, 2, 2.1, 2.2, or 2.3 or so, and the upper limit thereof may be 5, 4.8, 4.6, 4.4, 4.2, 4, 3.8, 3.6, 3.4, 3.2, 3.0, 2.8, 2.6, 2.5, or 2.5 or so. The ratio may be within a range of more than or equal to, or more than any one of the above-described lower limits; within a range of less than or equal to, or less than any one of the above-described upper limits; or within a range of less than or equal to, or less than any one of the above-described upper limits while being more than or equal to, or more than any one of the above-described lower limits. Here, the average particle diameters of the hydroxide filler and the additional filler are weighted averages of the respective average particle diameters. For example, if the filler component comprises as the hydroxide filler a filler (A) with an average particle diameter of D1 and a filler (B) with an average particle diameter of D2, and the weight ratio between the fillers is W1: W2 (A: B), the weighted average can be calculated as $(D1 \times W1 + D2 \times W2)/(W1 + W2)$, which is also the same for the additional filler. As the filler component further comprises the additional filler having the average particle diameter, and simultaneously the average particle diameter ratio with the hydroxide filler satisfies the above range, it is possible to ensure thixotropy, viscosity, and thermal conductivity properties suitable for the process.

The curable composition according to one example of the present application may comprise a plasticizer, as described above. The curable composition according to one example of the present application may comprise a plasticizer in an appropriate ratio to improve the problems of storage stability and blending property deterioration due to the isocyanate group present in the isocyanate compound and the moisture and/or hydroxyl group of the filler component. As described above, by comprising an appropriate ratio of plasticizer, it is possible to secure a curable composition with a low viscosity increase rate due to change over time and excellent blending properties. Also, despite the application of the plasticizer, it is possible to form a cured product having appropriate hardness.

In the curable composition according to one example of the present application, as the plasticizer, one or more selected from the group consisting of a phthalic acid compound, a phosphoric acid compound, an adipic acid compound, a sebacic acid compound, a citric acid compound, a glycolic acid compound, a trimellitic acid compound, a polyester compound, an epoxidized soybean oil, a chlorinated paraffin, a chlorinated fatty acid ester, a fatty acid compound, and a vegetable oil may be used. For example, as the phthalate compound, one or more of dimethyl phthalate, diethyl phthalate, dibutyl phthalate, dihexyl phthalate, di-n-octyl phthalate, di-2-ethylhexyl phthalate, diisooctyl phthalate, dicapryl phthalate, dinonyl phthalate, diisononyl phthalate, didecyl phthalate, diundecyl phthalate, dilauryl phthalate, ditridecyl phthalate, dibenzyl phthalate, dicyclohexyl phthalate, butyl benzyl phthalate, octyl decyl phthalate, butyl octyl phthalate, octyl benzyl phthalate, n-hexyl n-decyl phthalate, n-octyl phthalate, and n-decyl phthalate may be used. Also, as the phosphoric acid compound, one or more of tricresyl phosphate, trioctyl phosphate, triphenyl phosphate, octyl diphenyl phosphate, cresyl diphenyl phosphate, and trichloroethyl phosphate may be used. In addition, as the adipic acid compound, one or more of dibutoxyethoxyethyl adipate (DBEEA), dioctyl adipate, diisooctyl adipate, di-n-octyl adipate, didecyl adipate, diisodecyl adipate, dinonyl adipate, diisononyl adipate, n-octyl n-decyl adipate, n-heptyl adipate, and n-nonyl adipate may be used. Furthermore, as the sebacic acid compound, one or more of dibutyl sebacate, dioctyl sebacate, diisooctyl sebacate, and butyl benzyl may be used. Also, as the citric acid compound, one or more of triethyl citrate, acetyl triethyl citrate, tributyl citrate, acetyl tributyl citrate, and acetyl trioctyl citrate may be used. In addition, as the glycolic acid compound, one or more of methyl phthalyl ethyl glycolate, ethyl phthalyl ethyl glycolate, and butyl phthalyl ethyl glycolate may be used. Furthermore, as the trimellitic acid compound, one or more of trioctyl trimellitate and tri-n-octyl n-decyl trimellitate may be used.

The curable composition according to one example of the present application may comprise the combination with the isocyanate compound and the filler component, and one or more selected from the group consisting of a phthalic acid compound and an adipic acid compound as the plasticizer, considering the purpose of the present application.

To achieve an appropriate effect, a non-reactive ester compound from the above-mentioned types may be used as the plasticizer. The term non-reactivity means that the compound is not reactive with the isocyanate compound contained in the curable composition, and the ester compound means a compound having at least one ester bond.

The lower limit of the number of ester bonds contained in the non-reactive ester compound may be 1, or 2 or so, and the upper limit thereof may be 10, 9, 8, 7, 6, 5, 4, 3, or 2 or so. The number of ester bonds may be within a range of more than or equal to, or more than any one of the above-described lower limits; within a range of less than or equal to, or less than any one of the above-described upper limits; or within a range of less than or equal to, or less than any one of the above-described upper limits while being more than or equal to, or more than any one of the above-described lower limits.

Also, in the non-reactive ester compound, one end of the ester bond may be connected to an aromatic structure. At this time, the lower limit of the carbon number in the aromatic structure may be 6, and the upper limit may be about 20, 18,

16, 14, 12, 10, 8, or 6 or so. The carbon number may be within a range of more than or equal to, or more than any one of the above-described lower limits; within a range of less than or equal to, or less than any one of the above-described upper limits; or within a range of less than or equal to, or less than any one of the above-described upper limits while being more than or equal to, or more than any one of the above-described lower limits.

In the non-reactive ester compound, the other end of the ester bond (the other end not connected to the aromatic structure) may be connected to an alkyl group, an alkenyl group, or an alkynyl group. At this time, the lower limit of the carbon number of each of the alkyl group, alkenyl group, or alkynyl group may be 6, 7, 8, or 9, and the upper limit thereof may be 30, 28, 26, 24, 22, 20, 18, 16, 14, 12, or 10 or so. The carbon number may be within a range of more than or equal to, or more than any one of the above-described lower limits; within a range of less than or equal to, or less than any one of the above-described upper limits; or within a range of less than or equal to, or less than any one of the above-described upper limits while being more than or equal to, or more than any one of the above-described lower limits. The alkyl group, alkenyl group, or alkynyl group may be linear, branched, or cyclic, and may be suitably linear or branched, or branched.

The lower limit of the molecular weight (molar mass or weight average molecular weight) of the non-reactive ester compound may be 200 g/mol, 250 g/mol, 300 g/mol, 350 g/mol, or 400 g/mol, and the upper limit thereof may be 2000 g/mol, 1500 g/mol, 1000 g/mol, 900 g/mol, 800 g/mol, 700 g/mol, 600 g/mol, 500 g/mol, or 450 g/mol or so. The molecular weight may be within a range of more than or equal to, or more than any one of the above-described lower limits; within a range of less than or equal to, or less than any one of the above-described upper limits; or within a range of less than or equal to, or less than any one of the above-described upper limits while being more than or equal to, or more than any one of the above-described lower limits. The alkyl group, alkenyl group, or alkynyl group may be linear, branched, or cyclic, and may be suitably linear or branched, or branched.

The lower limit of the weight ratio of the plasticizer relative to 100 parts by weight of the isocyanate compound may be 0.1 parts by weight, 0.5 parts by weight, 1 part by weight, 1.5 parts by weight, 2 parts by weight, 2.5 parts by weight, 3 parts by weight, 3.5 parts by weight, 4 parts by weight, 4.5 parts by weight, or 5 parts by weight or so, and the upper limit thereof may be 15 parts by weight, 14.5 parts by weight, 14 parts by weight, 13.5 parts by weight, 13 parts by weight, 12.5 parts by weight, 12 parts by weight, 11.5 parts by weight, 11 parts by weight, 10.5 parts by weight, or 10 parts by weight. The ratio may be within a range of more than or equal to, or more than any one of the above-described lower limits; within a range of less than or equal to, or less than any one of the above-described upper limits; or within a range of less than or equal to, or less than any one of the above-described upper limits while being more than or equal to, or more than any one of the above-described lower limits. As the plasticizer in the curable composition is adjusted to the above content ratio, it is possible to secure a cured product having excellent surface hardness and thermal conductivity, and it is possible to secure a curable composition with a low viscosity increase rate due to change over time and excellent blending properties.

In the curable composition according to one example of the present application, the lower limit of the weight ratio of the plasticizer relative to 100 parts by weight of the filler component may be 0.1 parts by weight, 0.15 parts by weight, 0.2 parts by weight, 0.25 parts by weight, 0.3 parts by weight, 0.35 parts by weight, 0.4 parts by weight, 0.45 parts by weight, or 0.5 parts by weight or so, and the upper limit thereof may be 1.5 parts by weight, 1.45 parts by weight, 1.4 parts by weight, 1.35 parts by weight, 1.3 parts by weight, 1.25 parts by weight, 1.2 parts by weight, 1.15 parts by weight, or 1.1 parts by weight or so. The ratio may be within a range of more than or equal to, or more than any one of the above-described lower limits; within a range of less than or equal to, or less than any one of the above-described upper limits; or within a range of less than or equal to, or less than any one of the above-described upper limits while being more than or equal to, or more than any one of the above-described lower limits. As the plasticizer in the curable composition is adjusted to the above content ratio, it is possible to secure a cured product having excellent surface hardness and thermal conductivity, and it is possible to secure a curable composition with a low viscosity increase rate due to change over time and excellent blending properties.

In the curable composition according to one example of the present application, the lower limit of the weight ratio of the plasticizer relative to 100 parts by weight of the hydroxide filler in the filler component may be 0.5 parts by weight, 0.55 parts by weight, 0.6 parts by weight, 0.65 parts by weight, 0.7 parts by weight, 0.75 parts by weight, 0.8 parts by weight, 0.85 parts by weight, or 0.9 parts by weight or so, and the upper limit thereof may be 10 parts by weight, 9 parts by weight, 8 parts by weight, 7 parts by weight, 6 parts by weight, 5 parts by weight, 4 parts by weight, 3 parts by weight, or 2 parts by weight or so. The ratio may be within a range of more than or equal to, or more than any one of the above-described lower limits; within a range of less than or equal to, or less than any one of the above-described upper limits; or within a range of less than or equal to, or less than any one of the above-described upper limits while being more than or equal to, or more than any one of the above-described lower limits. As the plasticizer in the curable composition is adjusted to the above content ratio in consideration of the combination with the hydroxide filler, it is possible to secure a cured product having excellent surface hardness and thermal conductivity, and it is possible to secure a curable composition with a low viscosity increase rate due to change over time and excellent blending properties.

The curable composition according to one example of the present application can be helpful in securing the desired physical properties by further comprising an additional compound, if necessary. As the additional compound comprises one or more of those mentioned below, the present application can help secure the desired physical properties.

The curable composition according to one example of the present application may further comprise a viscosity modifier, for example, a thixotropy imparting agent, a diluent, a surface treatment agent, or a coupling agent, and the like, if necessary, for viscosity adjustment, for example, viscosity increase or decrease, or for viscosity adjustment according to shear force. The thixotropy imparting agent can adjust the viscosity of the curable composition according to the shear force. The usable thixotropy imparting agent may be exemplified by fumed silica, and the like. The diluent is usually used to lower the viscosity of the curable composition, in which various types known in the industry can be used without limitation if they can exhibit such actions. The surface treatment agent is for treating the surface of the filler introduced into the curable composition, in which various types known in the industry can be used without limitation if they can exhibit such actions. In the case of the coupling agent, for example, it can be used to improve the dispersibility between the filler component and other components, and various types known in the industry can be used without limitation if they can exhibit such actions. Also, the curable composition according to one example of the present application may further comprise a flame-retardant or flame-retardant auxiliary agent, and the like, if necessary. The curable composition further comprising a flame-retardant or flame-retardant auxiliary agent may be cured to form a flame-retardant resin. The flame-retardant is not particularly limited, where various known flame-retardants may be applied, and for example, a solid filler type flame-retardant or a liquid flame-retardant, and the like may be applied. The flame-retardant includes, for example, an organic flame-retardant such as melamine cyanurate, or an inorganic flame-retardant such as magnesium hydroxide, and the like, but is not limited thereto. If the amount of thermally conductive filler included in the curable composition is large, a liquid type flame-retardant material (TEP, triethyl phosphate or TCPP, tris(1,3-chloro-2-propyl)phosphate, etc.) may also be used. In addition, a silane coupling agent capable of acting as a flame-retardant synergist may also be added. Furthermore, the curable composition according to one example of the present application may also further use a dispersant to improve dispersibility, if necessary, where various types of dispersants known in the art may be used without limitation, and for example, a polyester dispersant, and the like may be used. In addition, the curable composition according to one example of the present application may use a hygroscopic agent, if necessary, where the hygroscopic agent may be used without limitation if the isocyanate compound is intended to minimize the effect on moisture, and for example, a siloxane compound, and the like may be used.

In the curable composition according to one example of the present application, the upper limit of the density measured at room temperature (about 25°C) may be 2.5 g/mL, 2.49 g/mL, 2.48 g/mL, 2.47 g/mL, 2.46 g/mL, 2.45 g/mL, 2.44 g/mL, 2.43 g/mL, 2.42 g/mL, 2.41 g/mL, or 2.4 g/mL or so, and the lower limit thereof may be 1 g/mL or so. The density may be within a range of less than or equal to, or less than any one of the above-described upper limits; or within a range of less than or equal to, or less than any one of the above-described upper limits while being more than or equal to, or more than any one of the above-described lower limits. As the curable composition combines the isocyanate compound, filler component, and plasticizer as described above, it is possible to secure low density characteristics, as described above. In addition, specifically, the density may be measured according to the density measurement section in the examples to be described below.

The curable composition according to one example of the present application may have a viscosity change rate ($V_R$) according to General Equation 1 below within a predetermined range. For example, the upper limit of the viscosity change rate $V_R$ may be 15%, 14%, 13%, 12%, 11%, 10%, 9%, 8%, 7%, 6%, 5%, 4.9%, 4.8%, 4.7%, 4.6%, or 4.5% or so, and the lower limit thereof may be 0%, 1%, 2%, 3%, 4%, or 5% or so. The viscosity change rate may be within a range of less than or equal to, or less than any one of the above-described upper limits; or within a range of less than or equal to, or less than any one of the above-described upper limits while being more than or equal to, or more than any one of the above-described lower limits.

[General Equation 1]

$$V_R=100\times|V_f-V_i|/V_i$$

In General Equation 1, $V_i$ is the initial viscosity of the curable composition measured at a shear rate of 1.2 rpm at room temperature, and $V_f$ is the viscosity of the curable composition measured at a shear rate of 1.2 rpm at room temperature after maintaining it at room temperature for 240 hours from the time point of measuring $V_i$. The method for measuring the viscosity is described in the example section of this specification.

The curable composition may have a low viscosity change rate over time, as described above, by combining the isocyanate compound, filler component, and plasticizer as described above. The curable composition according to one example of the present application comprises an excessive amount of hydroxide filler to ensure low density characteristics, but it is possible to make it to have a low viscosity change rate due to change over time based on an appropriate combination of the isocyanate compound and the plasticizer.

The curable composition according to one example of the present application may be formed by mixing the respective components as listed above. Also, the mixing order of the curable composition according to one example of the

present application is not particularly limited if all necessary components may be included. However, when the filler component and the isocyanate compound are blended, it may be performed by a method of blending filler particles with the smallest average particle diameter first to prepare a primary mixture, and further blending filler particles with average particle diameters of different sizes into the primary mixture to prepare a secondary mixture.

Specifically, the method for preparing a curable composition according to one example of the present application may comprise steps of: mixing an isocyanate compound, the second hydroxide filler, and a plasticizer to prepare a primary mixture; and further adding and mixing the first hydroxide filler to the primary mixture to prepare a secondary mixture. Here, in the step of preparing the secondary mixture, the first hydroxide filler and the additional filler may further be added to the primary mixture.

When the curable composition is prepared in the above manner, phenomena of mixing between the filler component and the isocyanate compound, and agglomeration between the filler particles in the filler component can be minimized.

The curable composition according to another example of the present application comprises a main part comprising a polyol compound; and a curing agent part, wherein the curing agent part may be the curable composition according to one example of the present application as described above, or may comprise the composition. Here, to distinguish the curable composition according to another example of the present application from the curable composition according to one example of the present application, the curable composition according to another example of the present application can be said to be a curable composition mixed with the main part. Since the curing agent part comprises the curable composition according to one example of the present application as described above, the details will be omitted.

The curable composition mixed with the main part according to one example of the present application may comprise components generally known as resins as well as components that can be converted to resins through a curing reaction or polymerization reaction, which may have adhesive or pressure-sensitive adhesive performance as such, and may have adhesive or pressure-sensitive adhesive performance through reactions such as the curing reaction.

Meanwhile, the curable composition mixed with the main part according to one example of the present application may be a solvent-based curable composition, a water-based curable composition, or a solventless curable composition, and may be an active energy ray (e.g., ultraviolet ray) curing type, a moisture curing type, a heat curing type, or a room temperature curing type. Considering the purpose of the present application, it may be appropriate that the curable composition mixed with the main part is the solventless type and/or the room temperature curing type.

The term polyol compound as used in the present application may mean a compound having two or more hydroxy groups at the ends of its chemical structure. More specifically, a compound having two hydroxy groups can be called a diol, and a compound having three hydroxy groups can be called a triol. In the curable composition mixed with the main part according to one example of the present application, the polyol compound included in the main part is not particularly limited as long as it satisfies the above definition, and for example, (poly)ethylene glycol, diethylene glycol, (poly)propylene glycol, 1,2-butylene glycol, 2,3-butylene glycol, 1,3-propanediol, 1,3-butanediol, 1,4-butanediol, 1,6-hexanediol, neopentyl glycol, 1,2-ethylhexyldiol, 1,5-pentanediol, 1,9-nonanediol, 1,10-decanediol, 1,3-cyclohexanedimethanol and 1,4-cyclohexanedimethanol, (poly)ethylenetriol, diethylenetriol, (poly)propylenetriol, glycerin, 1,2,3-butanetriol, 1,2,4-butanetriol, 1,3,4-hexanetriol, 1,3,6-hexanetriol units, and trimethylolpropane, and the like may be used. Also, in another example, the polyol compound included in the main part may comprise a polyester polyol. The polyester polyol may include a carboxylic acid-based polyol and/or a caprolactone-based polyol. Here, the carboxylic acid-based polyol may be a polyol compound represented by Formula 1 below, and the caprolactone-based polyol may be a polyol compound represented by Formula 2 below.

[Formula 1]

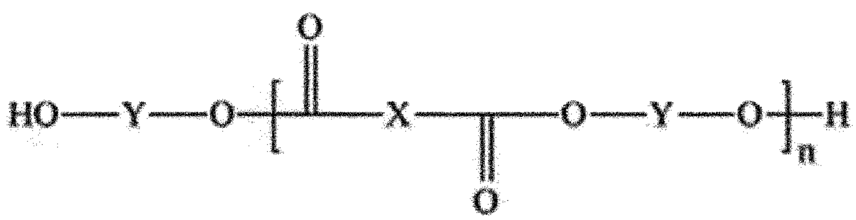

[Formula 2]

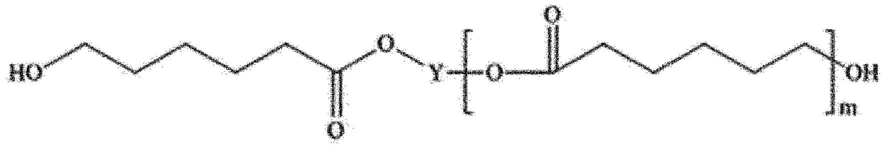

In Formulas 1 and 2, X is a dicarboxylic acid-derived unit, Y is a polyol-derived unit, for example, a triol or diol unit, and n and m are arbitrary numbers.

Here, the dicarboxylic acid-derived unit is a unit formed by performing a urethane reaction of a dicarboxylic acid with a polyol compound, and the polyol compound-derived unit is a unit formed by performing a urethane reaction of a polyol compound with a dicarboxylic acid or caprolactone.

That is, when the hydroxy group of the polyol compound reacts with the carboxyl group of the dicarboxylic acid, a water (H2O) molecule is released through a condensation reaction, and simultaneously an ester bond is formed, where X of Formula 1 above means a moiety excluding the ester bond portion after the dicarboxylic acid forms the ester bond by the condensation reaction, Y is also a moiety excluding the ester bond after the polyol compound forms the ester bond by the condensation reaction, and the ester bond is represented in Formula 1.

In addition, Y of Formula 2 also represents a moiety excluding the ester bond after the polyol compound forms the ester bond with the caprolactone.

Meanwhile, here, when the polyol compound-derived unit of Y is a unit derived from a polyol compound, such as a triol unit, containing three or more hydroxy groups, a structure in which the Y moiety is branched in the structure of the above formula may be implemented.

The type of the dicarboxylic acid-derived unit of X in Formula 1 is not particularly limited, but to secure desired physical properties, it may be any one unit selected from the group consisting of a phthalic acid unit, an isophthalic acid unit, a terephthalic acid unit, a trimellitic acid unit, a tetrahydrophthalic acid unit, a hexahydrophthalic acid unit, a tetrachlorophthalic acid unit, an oxalic acid unit, an adipic acid unit, an azelaic acid unit, a sebacic acid unit, a succinic acid unit, a malic acid unit, a glutaric acid unit, a malonic acid unit, a pimelic acid unit, a suberic acid unit, a 2,2-dimethylsuccinic acid unit, a 3,3-dimethylglutaric acid unit, a 2,2-dimethylglutaric acid unit, a maleic acid unit, a fumaric acid unit, an itaconic acid unit, and a fatty acid unit.

In Formulas 1 and 2, the type of the polyol compound-derived unit of Y is not particularly limited, but it may be any one, or two or more selected from the group consisting of an ethylene glycol unit, a propylene glycol unit, a 1,2-butylene glycol unit, a 2,3-butylene glycol unit, a 1,3-propanediol unit, a 1,3-butanediol unit, a 1,4-butanediol unit, a 1,6-hexanediol unit, a neopentyl glycol unit, a 1,2-ethylhexyldiol unit, a 1,5-pentanediol unit, a 1,10-decanediol unit, a 1,3-cyclohexanedimethanol unit, a 1,4-cyclohexanedimethanol unit, a glycerin unit, and a trimethylolpropane unit.

In Formula 1, n is an arbitrary number, and its range may be selected considering the desired physical properties, and for example, it may be about 2 to 10 or 2 to 5. In Formula 2, m is an arbitrary number, and its range may be selected considering the desired physical properties, and for example, it may be about 1 to 10 or 1 to 5.

In the curable composition mixed with the main part according to one example of the present application, the lower limit of the weight ratio of the polyol compound in the main part relative to the total weight of the main part may be 1 weight%, 1.5 weight%, 2 weight%, 2.5 weight%, 3 weight%, 3.5 weight%, 4 weight%, 4.5 weight%, 5 weight%, 5.5 weight%, 6 weight%, 6.5 weight%, 7 weight%, 7.5 weight%, 8 weight%, 8.5 weight%, or 9.5 weight% or so, and the upper limit thereof may be 20 weight%, 18 weight%, 16 weight%, 14 weight%, 12 weight%, or 10 weight% or so. The ratio may be within a range of more than or equal to, or more than any one of the above-described lower limits; within a range of less than or equal to, or less than any one of the above-described upper limits; or within a range of less than or equal to, or less than any one of the above-described upper limits while being more than or equal to, or more than any one of the above-described lower limits. When the polyol compound is adjusted to the above-described content ratio, it is possible to secure a cured product having excellent surface hardness upon combination with the curing agent part.

In the curable composition mixed with the main part according to one example of the present application, the main part may further comprise a filler component, as needed, during the process. The filler component may be a thermally conductive filler, and one or two or more as appropriately selected may be used as needed, where the shape or ratio is not particularly limited, which may be selected in consideration of the viscosity of the main part, the possibility of settling in the cured product after combination with the curing agent part, the desired thermal resistance or thermal conductivity, the insulation, the filling effect, or the dispersibility, and the like. In addition, even if the same type of fillers is used, those with different shapes may be mixed and used, and those with different average particle diameters may also be mixed and used. For example, a mixture of aluminum hydroxide, aluminum, and alumina may be used, and their respective shapes and average particle diameters may be different.

In the curable composition mixed with the main part according to one example of the present application, the filler

component of the main part may be, for example, an oxide filler such as aluminum oxide (alumina), magnesium oxide, beryllium oxide, or titanium oxide; a nitride filler such as boron nitride, silicon nitride, or aluminum nitride, a carbide filler such as silicon carbide; a hydroxide filler such as aluminum hydroxide or magnesium hydroxide; a metal filler such as copper, silver, iron, aluminum or nickel; a metal alloy filler such as titanium; silicon powder such as quartz, glass, or silica; or a carbon filler such as graphite or activated carbon, but is not limited thereto.

In the curable composition mixed with the main part according to one example of the present application, the lower limit of the weight ratio of the filler component in the main part relative to 100 parts by weight of the polyol compound may be 500 parts by weight, 600 parts by weight, 700 parts by weight, 800 parts by weight, or 900 parts by weight or so, and the upper limit thereof may be 2,000 parts by weight, 1,500 parts by weight, or 1,000 parts by weight or so. The ratio may be within a range of more than or equal to, or more than any one of the above-described lower limits; within a range of less than or equal to, or less than any one of the above-described upper limits; or within a range of less than or equal to, or less than any one of the above-described upper limits while being more than or equal to, or more than any one of the above-described lower limits. When the contents of the polyol compound and the filler component are adjusted to the above-mentioned ratio, it is possible to secure a cured product having excellent surface hardness and thermal conductivity upon combination with the curing agent part.

In the curable composition mixed with the main part according to one example of the present application, the filler component of the main part may comprise one or more selected from the group consisting of a first filler, a second filler, and a third filler. The first to third fillers each have different average particle diameters.

The lower limit of the average particle diameter of the first filler component may be 60 μm, 61 μm, 62 μm, 63 μm, 64 μm, 65 μm, 66 μm, 67 μm, 68 μm, 69 μm, or 70 μm or so, and the upper limit thereof may be 200 μm, 190 μm, 180 μm, 170 μm, 160 μm, or 150 μm or so. The average particle diameter may be within a range of more than or equal to, or more than any one of the above-described lower limits; within a range of less than or equal to, or less than any one of the above-described upper limits; or within a range of less than or equal to, or less than any one of the above-described upper limits while being more than or equal to, or more than any one of the above-described lower limits.

The lower limit of the average particle diameter of the second filler may be 10 μm, 12 μm, 14 μm, 16 μm, 18 μm, or 20 μm or so, and the upper limit thereof may be 58 μm, 56 μm, 54 μm, 52 μm, 50 μm, 48 μm, 46 μm, 44 μm, 42 μm, or 40 μm or so. The average particle diameter may be within a range of more than or equal to, or more than any one of the above-described lower limits; within a range of less than or equal to, or less than any one of the above-described upper limits; or within a range of less than or equal to, or less than any one of the above-described upper limits while being more than or equal to, or more than any one of the above-described lower limits.

The upper limit of the average particle diameter of the third filler may be 10 μm, 9 μm, 8 μm, 7 μm, 6 μm, 5 μm, 4 μm, 3 μm, or 2 μm or so, and the lower limit thereof may be 0.01 μm, 0.05 μm, 0.1 μm, or 0.5 μm or so. The average particle diameter may be within a range of more than or equal to, or more than any one of the above-described lower limits; within a range of less than or equal to, or less than any one of the above-described upper limits; or within a range of less than or equal to, or less than any one of the above-described upper limits while being more than or equal to, or more than any one of the above-described lower limits.

The first filler may be a hydroxide filler. In addition, the second filler and the third filler may each independently be one or more fillers selected from the group consisting of an oxide filler, a nitride filler, a carbide filler, a metal filler, an alloy filler, silicon powder, and a carbon filler. By selecting the first filler component, second filler component, and third filler component from the types listed above and adjusting the average particle diameter ratio and/or weight ratio, it is possible to secure appropriate thixotropy and viscosity during the process, and it is possible to form a cured product with excellent thermal conductivity after being mixed with the curing agent part later.

In the curable composition mixed with the main part according to one example of the present application, when the filler component of the main part simultaneously comprises a first filler component and a second filler component, the lower limit of the average particle diameter ratio (DMF1/DMF2) of the first filler component (DMF1) and the second filler component (DMF2) may be 1, 1.2, 1.4, 1.6, 1.8, 2, 2.2, 2.4, 2.6, 2.8, 3, 3.2, or 3.4 or so, and the upper limit thereof may be 5, 4.8, 4.6, 4.4, 4.2, 4, 3.8, or 3.6 or so. The ratio may be within a range of more than or equal to, or more than any one of the above-described lower limits; within a range of less than or equal to, or less than any one of the above-described upper limits; or within a range of less than or equal to, or less than any one of the above-described upper limits while being more than or equal to, or more than any one of the above-described lower limits. By satisfying the above ratio, it is possible to secure appropriate thixotropy and viscosity during the process.

Also, in the curable composition mixed with the main part according to one example of the present application, when the filler component of the main part simultaneously comprises a first filler component and a second filler component, the lower limit of the weight ratio (MF1/MF2) of the first filler component (MF1) and the second filler component (MF2) may be 0.1, 0.2, 0.3, 0.4, 0.5, 0.6, or 0.7 or so, and the upper limit thereof may be 5, 4.5, 4, 3.5, 3, 2.5, 2, 1.5, 1, or 0.75 or so. The ratio may be within a range of more than or equal to, or more than any one of the above-described lower limits; within a range of less than or equal to, or less than any one of the above-described upper limits; or within a range of less than or equal to, or less than any one of the above-described upper limits while being more than or equal to, or more than any one of

the above-described lower limits.

By satisfying the above ratio, it is possible to secure appropriate thixotropy and viscosity during the process.

In the curable composition mixed with the main part according to one example of the present application, when the filler component of the main part simultaneously comprises a first filler component and a third filler component, the lower limit of the average particle diameter ratio (DMF1/DMF3) of the first filler component (DMF1) and the third filler component (DMF3) may be 10, 11, 12, 13, 14, 15, 16, 17, 18, 19, 20, 21, 22, 23, 24, 25, 26, 27, 28, 29, or 30 or so, and the upper limit thereof may be 50, 49, 48, 47, 46, 45, 44, 43, 42, 41, 40, 39, 38, 37, 36, or 35 or so. The ratio may be within a range of more than or equal to, or more than any one of the above-described lower limits; within a range of less than or equal to, or less than any one of the above-described upper limits; or within a range of less than or equal to, or less than any one of the above-described upper limits while being more than or equal to, or more than any one of the above-described lower limits. By satisfying the above ratio, it is possible to secure appropriate thixotropy and viscosity during the process.

In the curable composition mixed with the main part according to one example of the present application, when the filler component of the main part simultaneously comprises a first filler component and a third filler component, the lower limit of the weight ratio (MF1/MF3) of the first filler component (MF1) and the third filler component (MF3) may be 0.5, 0.6, 0.7, 0.8, 0.9, or 1 or so, and the upper limit thereof may be 10, 8, 6, 4, or 2 or so. The ratio may be within a range of more than or equal to, or more than any one of the above-described lower limits; within a range of less than or equal to, or less than any one of the above-described upper limits; or within a range of less than or equal to, or less than any one of the above-described upper limits while being more than or equal to, or more than any one of the above-described lower limits. By satisfying the above ratio, it is possible to secure appropriate thixotropy and viscosity during the process.

In the curable composition mixed with the main part according to one example of the present application, the main part may further comprise an additive, where the additive may comprise one or more selected from the group consisting of a curing retardant, a catalyst, a plasticizer, a flame-retardant, a thixotropy imparting agent, a diluent, a surface treatment agent, a coupling agent, and a dispersant. If the curing retardant can delay curing of the main part, those used in the art can be used without limitation, and for example, 1-dodecylmercaptan and the like can be used. In addition, if the catalyst can promote the curing reaction when the main part and the curing agent part have been combined, those used in the art can be used without limitation, and for example, dibutyltin dilaurate can be used.

The curable composition mixed with the main part according to one example of the present application may be used by mixing the main part and the curing agent part at an appropriate volume ratio. The volume ratio means the ratio (B/A) of the volume (B) of the curing agent part to the volume (A) of the main part. For example, the lower limit of the ratio B/A may be 0.01, 0.05, 0.1, 0.5, 1, 10, 50, or 100 or so, and the upper limit thereof may be 200, 150, 100, 50, 40, 30, 20, 10, 9, 8, 7, 6, 5, 4, 3, 2, 1, 0.5, 0.1, 0.05, or 0.01 or so. The ratio may be within a range of more than or equal to, or more than any one of the above-described lower limits; within a range of less than or equal to, or less than any one of the above-described upper limits; or within a range of less than or equal to, or less than any one of the above-described upper limits while being more than or equal to, or more than any one of the above-described lower limits.

The curable composition mixed with the main part according to one example of the present application may be cured to form a cured product, and may have at least one or more physical properties of the following physical properties. The respective physical properties as listed below are independent, wherein one physical property does not take precedence over the other physical properties, and the cured product may satisfy at least one or two or more of the physical properties as listed below. The cured product of the curable composition mixed with the main part according to one example of the present application that satisfies at least one or two or more of the following physical properties results from the combination of the respective components.

The lower limit of the thermal conductivity of the cured product of the curable composition mixed with the main part according to one example of the present application may be 3.0 W/m·K, 3.05 W/m·K, or 3.1 W/m·K or so, and the upper limit thereof may be 20 W/m·K, 18 W/m·K, 16 W/m·K, 14 W/m·K, 12 W/m·K, 10 W/m·K, 8 W/m·K, 6 W/m·K, or 4 W/m·K or so. The thermal conductivity may be within a range of more than or equal to, or more than any one of the above-described lower limits; within a range of less than or equal to, or less than any one of the above-described upper limits; or within a range of less than or equal to, or less than any one of the above-described upper limits while being more than or equal to, or more than any one of the above-described lower limits. In a state where the cured product is manufactured as a sample (cured product) with a thickness of 20 mm, this thermal conductivity can be measured according to the ASTM D5470 standard or ISO 22007-2 standard along the thickness direction of the sample.

The lower limit of the surface hardness of the cured product of the curable composition mixed with the main part according to one example of the present application may be 50, 55, 60, 65, 70, 75, or 80 or so in Shore A hardness, and the upper limit thereof may be 80, 75, 70, 65, 60, or 55 or so in Shore D hardness, or may be 100, 95, or 90 or so in Shore A hardness. The hardness may be within a range of more than or equal to, or more than any one of the above-described lower limits; or within a range of less than or equal to, or less than any one of the above-described upper limits while being more than or equal to, or more than any one of the above-described lower limits. This hardness can be measured according to the ASTM D2240 standard, and the specific method is summarized in the examples of this specification.

The cured product of the curable composition mixed with the main part according to one example of the present

application can secure durability for application to products, such as automobiles, that require a long warranty period (about 15 years or more in the case of automobiles). The durability may mean that it does not fall off or peel off from a module case or battery cells of a battery module, or no crack occurs after a thermal shock test repeating 100 cycles, wherein one cycle includes maintaining the temperature at a low temperature of about -40°C for 30 minutes, and then raising the temperature to 80°C and maintaining it for 30 minutes

The cured product of the curable composition mixed with the main part according to one example of the present application may have an electrical insulation property of 10 kV/mm or more, 15 kV/mm or more, or 20 kV/mm or more. As the dielectric breakdown voltage has a higher value, the cured product of the curable composition mixed with the main part according to one example of the present application represents an excellent insulation property, which may be about 50 kV/mm or less, 45 kV/mm or less, 40 kV/mm or less, 35 kV/mm or less, or 30 kV/mm or less, but is not particularly limited. To achieve such a dielectric breakdown voltage, an insulating filler may be applied to the curable composition mixed with the main part according to one example of the present application. In general, among the thermally conductive fillers, a ceramic filler is known as a component capable of securing insulation properties. The electrical insulation property can be measured by a dielectric breakdown voltage measured according to ASTM D149 standard. In addition, if the cured product of the curable composition mixed with the main part according to one example of the present application can secure such an electrical insulation property, it is possible to secure stability while maintaining excellent performance for various materials, for example, a case or battery cells included in a battery module, and the like.

The cured product of the curable composition mixed with the main part according to one example of the present application may have a volume resistance of $1\times10^{10}$ $\Omega\cdot$cm or more, $3\times10^{10}$ $\Omega\cdot$cm or more, $7\times10^{10}$ $\Omega\cdot$cm or more, or $9\times10^{10}$ $\Omega\cdot$cm. cm or more, and in another example, the cured product of the curable composition mixed with the main part according to one example of the present application may have a volume resistance of $1\times10^{14}$ $\Omega\cdot$cm or less, $7.5\times10^{13}$ $\Omega\cdot$cm or less, $5\times10^{13}$ $\Omega$ $\cdot$cm or less, $2.5\times10^{13}$ $\Omega\cdot$cm or less, or $1\times10^{13}$ $\Omega\cdot$cm or less. Here, the volume resistance of the cured product of the curable composition mixed with the main part according to one example of the present application may be within a range formed by appropriately selecting the upper and lower limits as listed above. The volume resistance can be measured by a volume resistance measuring device, using the cured product of the curable composition mixed with the main part according to one example of the present application with a thickness of 0.2 cm, according to ASTM D257 standard. If the cured product of the curable composition mixed with the main part according to one example of the present application can secure such a volume resistance, it is possible to secure excellent electrical insulation performance, so that as it is used in various materials, for example, a case or battery cells of a battery module, and the like, it is possible to secure stability while maintaining performance.

The cured product of the curable composition mixed with the main part according to one example of the present application may have specific gravity of 5 or less. In another example, the specific gravity may be 4.5 or less, 4 or less, 3.5 or less, or 3 or less. As the specific gravity of the cured product of the curable composition mixed with the main part according to one example of the present application has a lower value, it is more advantageous for the lightness in weight of the applied product, so that the lower limit thereof is not particularly limited. For example, the specific gravity may be about 1 or more, or 1.2 or more.

It is appropriate that the cured product of the curable composition mixed with the main part according to one example of the present application does not contain volatile substances as much as possible. For example, the cured product of the curable composition mixed with the main part according to one example of the present application may have a non-volatile component ratio of 90 weight% or more, 95 weight% or more, or 98 weight% or more. Here, the ratio with the non-volatile component can be defined in the following manner. That is, the non-volatile content may be defined as the portion remaining after maintaining the cured product of the curable composition mixed with the main part according to one example of the present application at 100°C for 1 hour or so, and thus the ratio can be measured based on the ratio of the initial weight of the cured product of the curable composition mixed with the main part according to one example of the present application and the weight after maintaining it at 100°C for 1 hour or so.

The cured product of the curable composition mixed with the main part according to one example of the present application will have excellent resistance to deterioration as needed, and may be required to be as chemically non-reactive as possible.

It may be advantageous for the cured product of the curable composition mixed with the main part according to one example of the present application to have a low shrinkage rate during or after curing. Through this, it is possible to prevent the occurrence of delamination or voids capable of occurring during the manufacturing or using process of various materials, for example, a case or battery cells included in a battery module, and the like. The shrinkage rate may be appropriately adjusted in a range capable of representing the above-described effects, and may be, for example, less than 5%, less than 3%, or less than about 1%. As the shrinkage rate has a lower value, it is more advantageous, so that the lower limit thereof is not particularly limited.

It may also be advantageous for the cured product of the curable composition mixed with the main part according to one example of the present application to have a low coefficient of thermal expansion (CTE). Through this, it is possible to prevent the occurrence of delamination or voids capable of occurring during the manufacturing or using process of

various materials, for example, a case or battery cells included in a battery module, and the like. The coefficient of thermal expansion may be appropriately adjusted in a range capable of representing the above-described effects, and may be, for example, less than 300 ppm/K, less than 250 ppm/K, less than 200 ppm/K, less than 150 ppm/K, or less than 100 ppm/K. As the coefficient of thermal expansion has a lower value, it is more advantageous, so that the lower limit thereof is not particularly limited.

The tensile strength of the cured composition mixed with the main part according to one example of the present application may be appropriately adjusted, and through this, it is possible to secure excellent impact resistance, and the like. The tensile strength may be adjusted, for example, in a range of about 1.0 MPa or more.

In the cured product of the curable composition mixed with the main part according to one example of the present application, a 5% weight loss temperature in thermogravimetric analyses (TGA) may also be 400°C or more, or the remaining amount at 800°C may be 70 weight% or more. Due to these characteristics, stability at high temperature may be further improved with respect to various materials, for example, a case or battery cell included in a battery module, and the like. In another example, the remaining amount at 800°C may be about 75 weight% or more, about 80 weight% or more, about 85 weight% or more, or about 90 weight% or more. **In** another example, the remaining amount at 800°C may be about 99 weight% or less. The thermogravimetric analysis (TGA) may be measured within a range of 25°C to 800°C at a temperature increase rate of 20°C/min under a nitrogen ($N_2$) atmosphere of 60 $cm^3$/min. The thermogravimetric analysis (TGA) results can also be achieved by adjusting the composition of the cured product of the curable composition mixed with the main part according to one example of the present application. For example, the remaining amount at 800°C depends on the type or ratio of the thermally conductive filler contained in the cured product of the curable composition mixed with the main part according to one example of the present application, and when an excessive amount of the thermally conductive filler component is included, the remaining amount increases. However, when the polymer and/or monomer used in the curable composition mixed with the main part according to one example of the present application has generally high heat resistance compared to other polymers and/or monomers, the remaining amount more increases, and the polymer and/or monomer component included in the cured product of the curable composition mixed with the main part according to one example of the present application also affects the hardness as such.

The curable composition mixed with the main part according to one example of the present application may be formed by mixing the above-listed components. In addition, the curable composition mixed with the main part according to one example of the present application is not particularly limited as to the order of mixing if all necessary components can be included.

The curable composition mixed with the main part according to one example of the present application using the curable composition of the present application can be used in various electric and electronic products such as a clothes iron, a washing machine, a dryer, a clothes manager, an electric shaver, a microwave oven, an electric oven, an electric rice cooker, a refrigerator, a dishwasher, an air conditioner, a fan, a humidifier, an air purifier, a mobile phone, a radiotelegraph, a television, a radio, a computer and a laptop, or batteries such as a secondary battery, thereby dissipating the generated heat. Particularly, in a battery for an electric car manufactured by gathering battery cells to form one battery module and combining several battery modules to form one battery pack, the curable composition may be used as a material for connecting the battery cells or battery modules. When the curable composition is used as a material for connecting the battery cells or battery modules, it may serve to dissipate heat generated in the battery cell and fix the battery cells from external shock and vibration.

The cured product of the curable composition mixed with the main part according to one example of the present application may transfer heat generated from an exothermic body (e.g., an exothermic element) to a cooling region. That is, the cured product of the curable composition mixed with the main part according to one example of the present application may dissipate heat generated from the exothermic body. Here, the exothermic body may be battery cells or battery modules.

The cured product of the curable composition mixed with the main part according to one example of the present application may be positioned between the exothermic body and the cooling region to thermally contact them. The thermal contact means that the cured product of the curable composition mixed with the main part according to one example of the present application is in physically direct contact with the exothermic body and the cooling region to dissipate heat generated from the exothermic body to the cooling region, or even if the cured product of the curable composition mixed with the main part according to one example of the present application is not in direct contact with the exothermic body and the cooling region (that is, there is a separate layer between the cured product of the curable composition mixed with the main part according to one example of the present application and the exothermic body and/or the cooling region), it dissipates heat generated from the exothermic body to the cooling region.

## Advantageous Effects

The present application can provide a curable composition being advantageous for lightness in weight by exhibiting a low density, and having excellent keeping stability and storage stability by suppressing a viscosity change over

time, and a use thereof. In addition, the curable composition can exhibit excellent blending properties during a manufacturing process, and form a cured product having high thermal conductivity, low specific gravity (density), and relatively high hardness when cured. The present application can also provide a device comprising the curable composition or the cured product thereof.

## Mode for Invention

Hereinafter, the present application will be described through examples and comparative examples, but the scope of the present application is not limited due to the contents presented below.

### 1. Viscosity measurement

A viscosity of a curable composition was measured using a viscosity meter (manufacturer: Brookfield, model name: DV3T Rheometer) and a spindle CPA-52Z. The spindle was rotated for about 180 seconds at a shear rate of about 1.2 rpm at room temperature (about 25°C), and the last measured value was taken as the measured viscosity.
A plate was mounted on the plate connection part of the viscosity meter, and the distance between the spindle and the plate was adjusted using the control lever. After separating the plate, about 0.5 mL or so of a sample (curable composition) was applied to the center of the plate, and then the plate was again mounted on the plate connection part of the viscosity meter. After waiting until the torque became 0, the spindle was rotated for 180 seconds at a shear rate of 1.2 rpm at room temperature (about 25°C), and the last measured viscosity was confirmed.

### 2. Viscosity change rate measurement

An initial viscosity $V_i$ of a curable composition was measured by the above viscosity measurement method. The initial viscosity $V_i$ is the viscosity measured within about 10 minutes from the time point when the curable composition is prepared. The curable composition whose initial viscosity $V_i$ was measured was maintained at room temperature (about 25°C) for about 240 hours, and then the viscosity $V_f$ was measured by the above viscosity measurement method.
Subsequently, the viscosity change rate $V_R$ was obtained by substituting the viscosities $V_i$ and $V_f$ into General Equation 1 below. The viscosity measurement was performed on the curable composition whose blending property was evaluated as PASS in the following blending property evaluation method.

[General Equation 1]

$$V_R=100\times | V_f-V_i | /V_i$$

In General Equation 1, $V_i$ is the initial viscosity, and $V^f$ is the viscosity measured after maintaining the curable composition, in which the initial viscosity $V_i$ was measured, at room temperature (about 25°C) for 240 hours.

### 3. Density measurement

A curable composition was fully filled into a 10 mL vial using a pneumatic dispenser. The weight ($W_1$, unit: g) of the vial containing the curable composition was measured at room temperature (about 25°C), and as the weight of the vial measured at room temperature (about 25°C), the weight ($W_2$, unit: g) of the empty vial before being filled with the curable composition was also measured. The weight $W_3$ (g) obtained by subtracting the weight $W_2$ (g) from the weight $W_1$ (g) was divided by 10 mL to obtain the density ($W_3$/10, unit: g/mL).

### 4. Blending property evaluation

A blending property of a curable composition was evaluated based on the following criteria.

<Blending property evaluation criteria>

PASS: the case of confirming a state where the prepared curable composition had a smooth surface without any agglomeration of fillers when it was observed with the naked eye
NG: the case of confirming a state where the prepared curable composition had a rough surface due to agglomeration of fillers when it was observed with the naked eye

**5. Shore A hardness measurement**

A curable composition obtained by mixing each curable composition prepared in Examples or Comparative Examples with the main part of Preparation Example 1 at a volume ratio of 1:1 was injected into a disk-shaped silicone mold with a diameter of 50 mm and a thickness of 20 mm, and maintained at room temperature (about 25°C) for about 24 hours to prepare a cured product. The Shore A hardness of the surface of the cured product was measured at room temperature (about 25°C) according to ASTM D2240 standard using a hardness meter (Shore A hardness meter). The surface of the cured product in a flat state was pierced with an indenter capable of measuring Shore A hardness of a hardness meter (manufacturer: TQC Sheen, product name: LD0550), and then the hardness was measured while maintaining the piercing force.

**6. Thermal conductivity measurement**

A thermal conductivity was measured using a hot disk method. A curable composition obtained by mixing each curable composition prepared in Examples or Comparative Examples with the main part of Preparation Example 1 at a volume ratio of 1:1 was injected into a disk-shaped silicone mold with a diameter of 50 mm and a thickness of 20 mm, and maintained at room temperature (about 25°C) for about 24 hours to prepare a cured product. The thermal conductivity was measured according to ISO 22007-2 standard along the thickness direction of the cured material using a thermal conductivity measuring device (manufacturer: Hot disk, product name: TPS-2200).

**7. Average particle diameter measurement**

The average particle diameter of the filler mentioned in this specification is the D50 particle diameter, also referred to as a so-called median particle diameter, which is the particle diameter at the cumulative 50% of the volume-based cumulative curve of the particle size distribution. Such a particle diameter can be defined as the particle diameter at the point where the cumulative value is 50% in a cumulative curve that the particle size distribution is obtained based on volume and the total volume is set to 100%. The D50 particle diameter can be measured using Marven's MASTERSIZER 3000 equipment in accordance with ISO-13320, where ethanol is used as a solvent.

**8. Filler shape measurement**

The sphericity degree of the filler may be defined as the ratio (S'/S) of the surface area (S) of a particle (S) and the surface area (S') of a sphere having the same volume as the particle. For real particles, a circularity degree is generally used. The circularity degree is represented as the ratio of the boundary (P) of an image, which is obtained from a two-dimensional image of a real particle, and the boundary of a circle having the same area (A) as that of the same image, and is obtained by the following equation.

<Circularity degree equation>

$$\text{Circularity degree} = 4\pi A/P^2$$

The circularity degree is expressed as a value from 0 to 1, where a perfect circle has a value of 1, and the more irregularly shaped particles have values lower than 1. In this specification, the sphericity value was taken as the average value of the circularity degree measured with Marvern's particle shape analysis equipment (FPIA-3000).

If the circularity degree thus measured was 0.9 or more, it was defined as a spherical filler, and if it was less than 0.9, it was defined as a non-spherical or rectangular filler.

**Preparation Example 1. Main part**

A polyol compound (P), a catalyst (C), alumina (FP1) (rectangular, average particle diameter: 1 μm to 2 μm), and an additive (AP) were mixed in a weight ratio of about 30:0.225:81.9:4.581 (P: C: FP1: AP) to prepare a primary mixture (Mx1), and stirred primarily until appropriate mixing was achieved with a paste mixer under the conditions of 500 rpm in the revolution direction and 400 rpm in the spin direction. Alumina (FP2) (spherical, average particle diameter: 20 μm) was added to the primary mixture at a ratio of 109.2 parts by weight relative to 81.9 parts by weight of the alumina (FP1), and aluminum hydroxide (FP3) (rectangular, average particle diameter: 70 μm) was added to the vessel at a ratio of 81.9 parts

by weight relative to 81.9 parts by weight of the alumina (FP1) to prepare a secondary mixture (Mx2). The secondary mixture (Mx2) was stirred until it was uniformly mixed with a paste mixer under the conditions of 500 rpm in the revolution direction and 400 rpm in the spin direction, and defoamed under the conditions of 500 rpm in the revolution direction and 150 rpm in the spin direction to prepare a main part.

The weight ratio of the polyol compound (P), catalyst (C), alumina (FP1), alumina (FP2), aluminum hydroxide (FP3) and additive (AP) in the main part was about 30:0.225:81.9:109.2:81.9:4.581 or so (P: C: FP1: FP2: FP3: AP).

As the polyol compound (P) of the main part, a caprolactone-based polyol(weight average molecular weight: about 860 g/mol) obtained by reacting 1,4-butanediol (1,4-BDol) and caprolactone (CL) at a ratio of 1:2.78 (1,4-BDol: CL) was used; as the catalyst (C), dibutyltin dilaurate was used; and as the additive (AP), one obtained by mixing a curing retardant (AP1), a dispersant (AP2), and a flame-retardant (AP3) in a weight ratio of 0.381:0.351:3.750 (AP1: AP2: AP3) was used. As the curing retardant, 1-dodecyl mercaptan was used; as the dispersant, a phosphoric acid-modified polyester dispersant was used; and as the flame-retardant, one obtained by mixing a phosphorus-based liquid flame-retardant (J1) and a phosphorus-based solid flame-retardant (J2) in a weight ratio of 1:1.5 (J1: J2) was used.

**Example 1.**

**(1) Preparation of curable composition (1)**

An isocyanate compound (I), aluminum hydroxide (FI1) (rectangular, average particle diameter: 1 μm to 2 μm), a plasticizer (Pz), and an additive (AI) were placed in a vessel in a weight ratio of 30:54.6:1.5:6.852 (I: FI1: Pz: AI) to prepare a primary mixture (My1), and stirred primarily until it was uniformly mixed with a paste mixer under the conditions of 500 rpm in the revolution direction and 400 rpm in the spin direction. Aluminum hydroxide (FI2) (rectangular, average particle diameter: 70 μm) was added to a vessel at a ratio of 109.2 parts by weight relative to 54.6 parts by weight of the aluminum hydroxide (FI1), spherical alumina (FI3) (spherical, average particle diameter: 20 μm) was added to the vessel at a ratio of 109.2 parts by weight relative to 54.6 parts by weight of the aluminum hydroxide (FI1), and then further mixed with the primary mixture (My1) to prepare a secondary mixture (My2). The secondary mixture (My2) was stirred until it was uniformly mixed with a paste mixer under the conditions of 500 rpm in the revolution direction and 400 rpm in the spin direction, and then additionally defoamed under the conditions of 500 rpm in the revolution direction and 150 rpm in the spin direction to prepare a curable composition.

The curable composition comprised the isocyanate compound (I), aluminum hydroxide (FI1), aluminum hydroxide (FI2), spherical alumina (FI3), plasticizer (Pz), and additive (AI) in a weight ratio of 30:54.6:109.2:109.2:1.5:6.852 (I: FI1: FI2: FI3: Pz: AI).

As the isocyanate compound (I), a mixture of hexamethylene diisocyanate trimer and hexamethylene diisocyanate in a weight ratio of about 1:1 was used, and as the plasticizer, diisononyl phthalate (DINA) was used. As the additive (AI), one obtained by mixing a moisture absorbent (AI1), a dispersant (AI2), and a flame-retardant (AI3) in a weight ratio of 2.430:0.672:3.750 (AI1: AI2: AI3) was used. As the moisture absorbent, a vinyl groupcontaining siloxane compound was used; as the dispersant, a phosphoric acid-modified polyester dispersant was used; and as the flame-retardant, one obtained by mixing a phosphorus-based liquid flame-retardant (J1) and a phosphorus-based solid flame-retardant (J2) in a weight ratio of 1:1.5 (J1: J2) was used.

**(2) Preparation of curable composition (2)**

The main part (MP) of Preparation Example 1 and the curable composition (1) (curing agent part (HP)) were each placed into a 40 mL cartridge, and mixed while fastening a static mixer, and then discharging them in a volume ratio of 1:1 (MP: HP) using a pneumatic dispenser to prepare a curable composition (2).

**Example 2.**

**(1) Preparation of curable composition (1)**

An isocyanate compound (I), rectangular aluminum hydroxide (FI1) (rectangular, average particle diameter: about 1 μm to 2 μm), a plasticizer (Pz), and an additive (AI) were placed in a vessel in a weight ratio of 30:54.6:3.0:6.852 (I: FI1: Pz: AI) to prepare a primary mixture (My1), and stirred primarily until it was uniformly mixed with a paste mixer under the conditions of 500 rpm in the revolution direction and 400 rpm in the spin direction. Aluminum hydroxide (FI2) (rectangular, average particle diameter: about 70 μm) was added to a vessel at a ratio of 109.2 parts by weight relative to 54.6 parts by weight of the aluminum hydroxide (FI1), alumina (FI3) (spherical, average particle diameter: about 20 μm) was added to the vessel at a ratio of 109.2 parts by weight relative to 54.6 parts by weight of the aluminum hydroxide (FI1), and then mixed with the primary mixture (My1) to prepare a secondary mixture (My2). The secondary mixture (My2) was

stirred until it was appropriately mixed with a paste mixer under the conditions of 500 rpm in the revolution direction and 400 rpm in the spin direction, and additionally defoamed under the conditions of 500 rpm in the revolution direction and 150 rpm in the spin direction to prepare a curable composition (1).

The curable composition (1) comprised the isocyanate compound (I), aluminum hydroxide (FI1), aluminum hydroxide (FI2), alumina (FI3), plasticizer (Pz), and additive (AI) in a weight ratio of 30:54.6:109.2:109.2:3.0:6.852 (I: FI1: FI2: FI3: Pz: AI).

The isocyanate compound (I), plasticizer (Pz), and additive (AI) as used were the same as in Example 1.

**(2) Preparation of curable composition (2)**

The curable composition (1) was mixed with the main part in the same manner as in Example 1 to prepare a curable composition (2).

**Comparative Example 1.**

**(1) Preparation of curable composition (1)**

An isocyanate compound (I), alumina (FI4) (rectangular, average particle diameter: about 1 μm to 2 μm), and an additive (AI) were placed in a vessel in a weight ratio of 30:54.6: 6.852 (I: FI4: AI) to prepare a primary mixture (My1), and stirred primarily until it was appropriately mixed with a paste mixer under the conditions of 500 rpm in the revolution direction and 400 rpm in the spin direction. Alumina (FI3) (spherical, average particle diameter: about 20 μm) was added to a vessel at a ratio of 109.2 parts by weight relative to 54.6 parts by weight of the alumina (FI4), alumina (FI5) (spherical, average particle diameter: about 70 μm) was added to the vessel at a ratio of 109.2 parts by weight relative to 54.6 parts by weight of the alumina (FI4) to further be mixed with the stirred primary mixture (My1), thereby preparing a secondary mixture (My2). The secondary mixture (My2) was stirred until it was appropriately mixed with a paste mixer under the conditions of 500 rpm in the revolution direction and 400 rpm in the spin direction, and then additionally defoamed under the conditions of 500 rpm in the revolution direction and 150 rpm in the spin direction to prepare a curable composition (2).

The curable composition comprised the isocyanate compound (I), alumina (FI4), alumina (FI3), alumina (FI5), and additive (AI) in a weight ratio of 30:54.6:109.2:109.2:6.852 (I: FI4: FI3: FI5: AI). Here, the isocyanate compound (I) and additive (AI) as used were the same as in Example 1.

**(2) Preparation of curable composition (2)**

The curable composition (1) was mixed with the main part in the same manner as in Example 1 to prepare a curable composition (2).

**Comparative Example 2.**

**(1) Preparation of curable composition (1)**

An isocyanate compound (I), aluminum hydroxide (FI1) (rectangular, average particle diameter: about 1 μm to 2 μm), and an additive (AI) were placed in a vessel in a weight ratio of 30:54.6:6.852 (I: FI1: AI) to prepare a primary mixture (My1), and stirred primarily until it was appropriately mixed with a paste mixer under the conditions of 500 rpm in the revolution direction and 400 rpm in the spin direction. Rectangular aluminum hydroxide (FI2) (rectangular, average particle diameter: about 70 μm) was added to a vessel at a ratio of 13.65 parts by weight relative to 54.6 parts by weight of the aluminum hydroxide (FI1), alumina (FI3) (spherical, average particle diameter: about 20 μm) was added to the vessel at a ratio of 109.2 parts by weight relative to 54.6 parts by weight of the aluminum hydroxide (FI1), and alumina (FI5) (spherical, average particle diameter: about 70 μm) was added to the vessel at a ratio of 95.55 parts by weight relative to 54.6 parts by weight of the aluminum hydroxide (FI1) to be further mixed with the stirred primary mixture (My1), thereby preparing a secondary mixture (My2). The secondary mixture (My2) was stirred until it was appropriately mixed with a paste mixer under the conditions of 500 rpm in the revolution direction and 400 rpm in the spin direction, and then additionally defoamed under the conditions of 500 rpm in the revolution direction and 150 rpm in the spin direction to prepare a curable composition (1).

The curable composition (1) comprised the isocyanate compound (I), aluminum hydroxide (FI1), aluminum hydroxide (FI2), alumina (FI3), alumina (FI5), and additive (AI) in a weight ratio of 30:54.6:13.65:109.2:95.55:6.852 (I: FI1: FI2: FI3: FI5: AI). The isocyanate compound (I) and additive (AI) as used were the same as in Example 1.

**(2) Preparation of curable composition (2)**

The curable composition (1) was mixed with the main part in the same manner as in Example 1 to prepare a curable composition (2).

**Comparative Example 3.**

**(1) Preparation of curable composition (1)**

An isocyanate compound (I), aluminum hydroxide (FI1) (rectangular, average particle diameter: about 1 μm to 2 μm), and an additive (AI) were placed in a vessel in a weight ratio of 30:54.6:6.852 (I: FI1: AI) to prepare a primary mixture (My1), and stirred primarily until it was appropriately mixed with a paste mixer under the conditions of 500 rpm in the revolution direction and 400 rpm in the spin direction. Aluminum hydroxide (FI2) (rectangular, average particle diameter: about 70 μm) was added to a vessel at a ratio of 68.25 parts by weight relative to 54.6 parts by weight of the aluminum hydroxide (FI1), alumina (FI3) (spherical, average particle diameter: about 20 μm) was added to the vessel at a ratio of 109.2 parts by weight relative to 54.6 parts by weight of the aluminum hydroxide (FI1), and spherical alumina (FI5) (spherical, average particle diameter: about 70 μm) was added to the vessel at a ratio of 40.95 parts by weight relative to 54.6 parts by weight of the aluminum hydroxide (FI1) to be further mixed with the primary mixture (My1), thereby preparing a secondary mixture (My2). The secondary mixture (My2) was stirred until it was appropriately mixed with a paste mixer under the conditions of 500 rpm in the revolution direction and 400 rpm in the spin direction, and then a curable composition (1) was finally prepared through a defoaming processed under the conditions of 500 rpm in the revolution direction and 150 rpm in the spin direction.

The curable composition (1) comprised the isocyanate compound (I), aluminum hydroxide (FI1), aluminum hydroxide (FI2), alumina (FI3), alumina (FI5), and additive (AI) in a weight ratio of 30:54.6:68.25:109.2:40.95:6.852 (I: FI1: FI2: FI3: FI5: AI). The isocyanate compound (I) and additive (AI) as used were the same as in Example 1.

**(2) Preparation of curable composition (2)**

The curable composition (1) was mixed with the main part in the same manner as in Example 1 to prepare a curable composition (2).

**Comparative Example 4.**

**(1) Preparation of curable composition**

An isocyanate compound (I), aluminum hydroxide (FI1) (rectangular, average particle diameter: about 1 μm to 2 μm), and an additive (AI) were placed in a vessel in a weight ratio of 30:54.6:6.852 (I: FI1: AI) to prepare a primary mixture (My1), and stirred primarily until it was appropriately mixed with a paste mixer under the conditions of 500 rpm in the revolution direction and 400 rpm in the spin direction. Aluminum hydroxide (FI2) (rectangular, average particle diameter: about 70 μm) was added to a vessel at a ratio of 109.2 parts by weight relative to 54.6 parts by weight of the aluminum hydroxide (FI1), and alumina (FI3) (spherical, average particle diameter: about 20 μm) was added to the vessel at a ratio of 109.2 parts by weight relative to 54.6 parts by weight of the aluminum hydroxide (FI1) to be further mixed with the stirred primary mixture (My1), thereby preparing a secondary mixture (My2). The secondary mixture (My2) was stirred until it was appropriately mixed with a paste mixer under the conditions of 500 rpm in the revolution direction and 400 rpm in the spin direction, and then a curable composition (1) was finally prepared through a defoaming processed under the conditions of 500 rpm in the revolution direction and 150 rpm in the spin direction.

The curable composition (1) comprised the isocyanate compound (I), aluminum hydroxide (FI1), aluminum hydroxide (FI2), alumina (FI3), and additive (AI) in weight ratio of 30:54.6:109.2:109.2:6.852 (I: FI1: FI2: FI3: AI). The isocyanate compound (I) and additive (AI) as used were the same as in Example 1.

**(2) Preparation of curable composition (2)**

The curable composition (1) was mixed with the main part in the same manner as in Example 1 to prepare the curable composition (2).

**Comparative Example 5.**

**(1) Preparation of curable composition (1)**

An isocyanate compound (I), aluminum hydroxide (FI1) (rectangular, average particle diameter: about 1 μm to 2 μm), and an additive (AI) were placed in a vessel in a weight ratio of 30:54.6:6.852 (I: FI1: AI) to prepare a primary mixture (My1), and stirred primarily until it was appropriately mixed with a paste mixer under the conditions of 500 rpm in the revolution direction and 400 rpm in the spin direction. Aluminum hydroxide (FI2) (rectangular, average particle diameter: about 70 μm) was added to a vessel at a ratio of 150.15 parts by weight relative to 54.6 parts by weight of the aluminum hydroxide (FI1), and alumina (FI3) (spherical, average particle diameter: about 20 μm) was added to the vessel at a ratio of 95.55 parts by weight relative to 54.6 parts by weight of the aluminum hydroxide (FI1) to be further mixed with the stirred primary mixture (My1), thereby preparing a secondary mixture (My2). The secondary mixture (My2) was stirred until it was appropriately mixed with a paste mixer under the conditions of 500 rpm in the revolution direction and 400 rpm in the spin direction, and then a curable composition (1) was finally prepared through a defoaming processed under the conditions of 500 rpm in the revolution direction and 150 rpm in the spin direction. The curable composition (1) comprised the isocyanate compound (I), aluminum hydroxide (FI1), aluminum hydroxide (FI2), alumina (FI3), and additive (AI) in a weight ratio of 30:54.6:150.15:95.55:6.852 (I: FI1: FI2: FI3: AI). The isocyanate compound (I) and additive (AI) as used were the same as in Example 1.

**(2) Preparation of curable composition (2)**

The curable composition (1) was mixed with the main part in the same manner as in Example 1 to prepare the curable composition (2).

**Comparative Example 6.**

**(1) Preparation of curable composition (1)**

An isocyanate compound (I), aluminum hydroxide (FI1) (rectangular, average particle diameter: about 1 μm to 2 μm), a plasticizer (Pz), and an additive (AI) were placed in a vessel in a weight ratio of 30:54.6:4.5:6.852 (I: FI1: Pz: AI) to prepare a primary mixture (My1), and stirred primarily until it was appropriately mixed with a paste mixer under the conditions of 500 rpm in the revolution direction and 400 rpm in the spin direction. Aluminum hydroxide (FI2) (rectangular, average particle diameter: about 70 μm) was added to a vessel at a ratio of 109.2 parts by weight relative to 54.6 parts by weight of the aluminum hydroxide (FI1), and alumina (FI3) (spherical, average particle diameter: about 20 μm) was added to the vessel at a ratio of 109.2 parts by weight relative to 54.6 parts by weight of the aluminum hydroxide (FI1) to be further mixed with the stirred primary mixture (My1), thereby preparing a secondary mixture (My2). The secondary mixture (My2) was stirred until it was appropriately mixed with a paste mixer under the conditions of 500 rpm in the revolution direction and 400 rpm in the spin direction, and then a curable composition was prepared through a defoaming processed under the conditions of 500 rpm in the revolution direction and 150 rpm in the spin direction.

The curable composition (1) comprised the isocyanate compound (I), aluminum hydroxide (FI1), aluminum hydroxide (FI2), alumina (FI3), plasticizer (Pz), and additive (AI) in a weight ratio of 30:54.6:109.2:109.2:4.5:6.852 (I: FI1: FI2: FI3: Pz: AI). The isocyanate compound (I), plasticizer (Pz), and additive (AI) as used were the same as in Example 1.

**(2) Preparation of curable composition (2)**

The curable composition (1) was mixed with the main part in the same manner as in Example 1 to prepare a curable composition (2).

The compositions and content ratios of the curable compositions (1) are as shown in Table 1 below. In Table 1 below, FI1 is the rectangular aluminum hydroxide with an average particle diameter of about 1 μm to 2 μm or so, and FI2 is the rectangular aluminum hydroxide with an average particle diameter of about 70 μm or so. Also, in Table 1 below, FI3 is the spherical alumina with an average particle diameter of about 20 μm or so, FI4 is the rectangular alumina with an average particle diameter of about 1 μm to 2 μm or so, and FI5 is the spherical alumina with an average particle diameter of about 70 μm or so.

[Table 1]

| | | Isocyanate compound (I) | Filler component | | | | | Plasticizer (Pz) | Additive (AI) |
|---|---|---|---|---|---|---|---|---|---|
| | | | FI1 | FI2 | FI3 | FI4 | FI5 | | |
| Example | 1 | 30 | 54.6 | 109.2 | 109.2 | - | - | 1.5 | 6.852 |
| | 2 | 30 | 54.6 | 109.2 | 109.2 | - | - | 3.0 | 6.852 |
| Comparative Example | 1 | 30 | - | - | 109.2 | 54.6 | 109.2 | - | 6.852 |
| | 2 | 30 | 54.6 | 13.65 | 109.2 | - | 95.55 | - | 6.852 |
| | 3 | 30 | 54.6 | 68.25 | 109.2 | - | 40.95 | - | 6.852 |
| | 4 | 30 | 54.6 | 109.2 | 109.2 | - | - | - | 6.852 |
| | 5 | 30 | 54.6 | 150.15 | 95.55 | - | - | - | 6.852 |
| | 6 | 30 | 54.6 | 109.2 | 109.2 | - | - | 4.5 | 6.852 |

The physical properties measured for the curable compositions of Examples and Comparative Examples were summarized in Table 2 below. In Table 2, the viscosity change rate, density and blending property are for the curable composition (1) before being mixed with the main part, and the Shore A hardness and thermal conductivity are for the curable composition mixed with the main part.

[Table 2]

| | | Viscosity change rate (VR, %) | Density (g/mL) | Blending property evaluation | Shore A hardness | Thermal conductivity (W/mK) |
|---|---|---|---|---|---|---|
| Example | 1 | 4.4 | 2.4 | PASS | 80 or more | 3.15 |
| | 2 | 3.5 | 2.4 | PASS | 80 or more | 3.13 |
| Comparative Example | 1 | 4.5 | 3.0 | PASS | 80 or more | 3.38 |
| | 2 | 7.3 | 2.9 | PASS | 80 or more | 3.31 |
| | 3 | 12.5 | 2.7 | PASS | 80 or more | 3.25 |
| | 4 | 20.5 | 2.4 | PASS | 80 or more | 3.12 |
| | 5 | Not measured | 2.2 | NG | 50 | 2.85 |
| | 6 | 1.0 | 2.4 | PASS | 60 | 2.90 |

Referring to Table 2, it can be confirmed that the curable compositions of Examples 1 and 2 secure a low viscosity change rate (VR) (keeping stability) and low-density characteristics. Also, referring to Table 2, it can be confirmed that both the curable compositions of Examples 1 and 2 have good blending properties, and have Shore A hardness and thermal conductivity at the desired level.

On the other hand, it can be confirmed that the curable compositions of Comparative Examples 1 and 2 have an excessively high density, and the curable compositions of Comparative Examples 3 and 4 exhibit an excessively high viscosity change rate ($V_R$), and the curable composition of Comparative Example 5 had poor blending properties, whereby the viscosity change rate ($V_R$) could not be measured. Also, referring to Table 2, the curable composition of Comparative Example 6 did not secure thermal conductivity and Shore A hardness.

## Claims

**1.** A curable composition, comprising:

an isocyanate compound,
a filler component, and
a plasticizer,
wherein a density of the curable composition is 2.5 g/mL or less.

2. The curable composition according to claim 1, wherein a $V_R$ of General Equation 1 below is 15% or less:

[General Equation 1]

$$V_R=100\times|V_f-V_i|/V_i$$

wherein the Vi is an initial room temperature viscosity of the curable composition at a shear rate of 1.2 rpm, and the $V_f$ is a room temperature viscosity of the curable composition measured at a shear rate of 1.2 rpm after maintaining the curable composition at room temperature for 240 hours.

3. The curable composition according to claim 1, wherein the filler component is present in an amount of 70 to 95 weight% based on a the total weight of the curable composition.

4. The curable composition according to claim 1, wherein the filler component comprises a hydroxide filler.

5. The curable composition according to claim 4, wherein the hydroxide filler is present in an amount of 30 to 80 weight% based on a total weight of the filler component.

6. The curable composition according to claim 1, wherein the filler component comprises a first hydroxide filler having an average particle diameter of 60 μm or more and a second hydroxide filler having an average particle diameter of 10 μm or less.

7. The curable composition according to claim 6, wherein a ratio of a weight of the first hydroxide filler relative to a weight of the second hydroxide filler is from 0.1 to 10.

8. The curable composition according to claim 6, wherein a ratio of the average particle diameter of the first hydroxide filler relative to the average particle diameter of the second hydroxide filler is from 10 to 100.

9. The curable composition according to claim 4, wherein the filler component further comprises a non-hydroxide filler.

10. The curable composition according to claim 9, wherein the filler component comprises the non-hydroxide filler in an amount of 10 to 200 parts by weight relative to 100 parts by weight of the hydroxide filler.

11. The curable composition according to claim 1, wherein the plasticizer comprises one or more selected from the group consisting of a phthalic acid compound, a phosphoric acid compound, an adipic acid compound, a sebacic acid compound, a citric acid compound, a glycolic acid compound, a trimellitic acid compound, a polyester compound, an epoxidized soybean oil, chlorinated paraffin, a chlorinated fatty acid ester, a fatty acid compound, and a vegetable oil.

12. The curable composition according to claim 4, wherein an amount of the plasticizer is from 0.01 to 10 parts by weight relative to 100 parts by weight of the hydroxide filler.

13. The curable composition according to claim 1, wherein the isocyanate compound comprises an aliphatic isocyanate compound.

14. The curable composition according to claim 1, wherein the isocyanate compound comprises a diisocyanate compound, and a polyisocyanate compound with trifunctionality or more.

15. A curable composition, comprising:

a main part containing a polyol compound; and
a curing agent part,
wherein the curing agent part comprises the curable composition of claim 1.

16. The curable composition according to claim 15, which is formulated to form a cured product which has a thermal conductivity of 3 W/m·K or more according to ISO 22007-2 standard, and which has a Shore A hardness of 80 or more.

17. The curable composition according to claim 15, wherein the polyol compound comprises a polyester polyol.

**18.** The curable composition according to claim 15, wherein the main part further comprises a filler component.

**19.** A device, comprising:

an exothermic body; and
a cooling region, and
a cured product of the curable composition of claim 15,
wherein the cured product is in contact with the exothermic body and the cooling region.

**20.** A battery module, comprising:
the cured product of the curable composition of claim 15.

**INTERNATIONAL SEARCH REPORT**

International application No.
**PCT/KR2023/007174**

**A. CLASSIFICATION OF SUBJECT MATTER**

**C08G 18/72**(2006.01)i; **C08G 18/42**(2006.01)i; **C08K 3/22**(2006.01)i; **C08K 3/013**(2018.01)i; **C08K 5/00**(2006.01)i; **H01M 10/653**(2014.01)i

According to International Patent Classification (IPC) or to both national classification and IPC

**B. FIELDS SEARCHED**

Minimum documentation searched (classification system followed by classification symbols)

C08G 18/72(2006.01); C08G 18/10(2006.01); C08G 18/32(2006.01); C08G 18/38(2006.01); C08G 18/40(2006.01); C08G 18/42(2006.01); C08K 3/22(2006.01); C08L 101/02(2006.01); C08L 75/04(2006.01); H01M 50/20(2021.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 이소시아네이트(isocyanate), 필러(filler), 가소제(plasticizer), 경화성 조성물(Curable composition), 밀도(density), 수산화 알루미늄(aluminum hydroxide), 점도(viscosity), 폴리올(polyol), 배터리 모듈(battery module)

**C. DOCUMENTS CONSIDERED TO BE RELEVANT**

| Category* | Citation of document, with indication, where appropriate, of the relevant passages | Relevant to claim No. |
|---|---|---|
| X<br>Y | KR 10-2015-0064064 A (DR. NEIDLINGER HOLDING GMBH) 10 June 2015 (2015-06-10)<br>See claims 1, 8, 10 and 13; and paragraphs [0018]-[0034], [0053]-[0069] and [0082]-[0092]. | 1-18<br>19,20 |
| Y | KR 10-2022-0043762 A (LG ENERGY SOLUTION, LTD.) 05 April 2022 (2022-04-05)<br>See claim 1; and paragraphs [0158], [0160] and [0163]. | 19,20 |
| X | JP 2022-503939 A (SIKA TECHNOLOGY AG) 12 January 2022 (2022-01-12)<br>See claims 1, 4 and 7. | 1,11,13 |
| A | JP 6990999 B2 (DAI ICHI KOGYO SEIYAKU CO., LTD.) 12 January 2022 (2022-01-12)<br>See claims 6 and 7; and paragraphs [0015], [0020], [0031], [0044] and [0048]-[0050]. | 1-20 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **07 September 2023** | **08 September 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

International application No.
**PCT/KR2023/007174**

**C. DOCUMENTS CONSIDERED TO BE RELEVANT**

| Category* | Citation of document, with indication, where appropriate, of the relevant passages | Relevant to claim No. |
|---|---|---|
| A | KR 10-2020-0115433 A (LG CHEM, LTD.) 07 October 2020 (2020-10-07) See claims 1, 4 and 14; and paragraphs [0037] and [0095]. | 1-20 |
| PX | KR 10-2023-0046974 A (LG CHEM, LTD.) 06 April 2023 (2023-04-06) See claims 17 and 20; and paragraphs [0079], [0186]-[0220], [0264]-[0324], [0337]-[0346] and [0457]. | 1-20 |

**INTERNATIONAL SEARCH REPORT**
**Information on patent family members**

International application No.
**PCT/KR2023/007174**

| Patent document cited in search report | Publication date (day/month/year) | Patent family member(s) | Publication date (day/month/year) |
|---|---|---|---|
| KR 10-2015-0064064 A | 10 June 2015 | BR 112015007220 A2 | 04 July 2017 |
| | | BR 112015007220 B1 | 25 May 2021 |
| | | CA 2886759 A1 | 10 April 2014 |
| | | CA 2886759 C | 12 June 2018 |
| | | CN 104718254 A | 17 June 2015 |
| | | CN 104718254 B | 21 July 2017 |
| | | DE 102012109500 A1 | 10 April 2014 |
| | | DK 2904049 T3 | 16 July 2018 |
| | | EP 2904049 A1 | 12 August 2015 |
| | | EP 2904049 B1 | 28 March 2018 |
| | | ES 2668898 T3 | 23 May 2018 |
| | | HU E038778 T2 | 28 November 2018 |
| | | JP 2015-530470 A | 15 October 2015 |
| | | JP 6557604 B2 | 07 August 2019 |
| | | MX 2015004227 A | 23 September 2015 |
| | | MX 370157 B | 03 December 2019 |
| | | PL 2904049 T3 | 31 October 2018 |
| | | PT 2904049 T | 22 May 2018 |
| | | RU 2673289 C1 | 23 November 2018 |
| | | SG 11201502623 A | 28 May 2015 |
| | | SI 2904049 T1 | 30 October 2018 |
| | | US 2015-0197680 A1 | 16 July 2015 |
| | | WO 2014-053252 A1 | 10 April 2014 |
| | | ZA 201503046 B | 30 November 2016 |
| KR 10-2022-0043762 A | 05 April 2022 | None | |
| JP 2022-503939 A | 12 January 2022 | CN 112805313 A | 14 May 2021 |
| | | CN 112805313 B | 28 February 2023 |
| | | EP 3861041 A1 | 11 August 2021 |
| | | US 2022-0049045 A1 | 17 February 2022 |
| | | WO 2020-070207 A1 | 09 April 2020 |
| JP 6990999 B2 | 12 January 2022 | JP 2019-001887 A | 10 January 2019 |
| KR 10-2020-0115433 A | 07 October 2020 | CN 111133021 A | 08 May 2020 |
| | | CN 111133021 B | 08 April 2022 |
| | | EP 3686230 A1 | 29 July 2020 |
| | | EP 3686230 B1 | 31 August 2022 |
| | | JP 2020-532628 A | 12 November 2020 |
| | | JP 6999218 B2 | 10 February 2022 |
| | | KR 10-2019-0113583 A | 08 October 2019 |
| | | KR 10-2162495 B1 | 07 October 2020 |
| | | KR 10-2267539 B1 | 22 June 2021 |
| | | US 11603427 B2 | 14 March 2023 |
| | | US 2020-0277433 A1 | 03 September 2020 |
| | | WO 2019-190106 A1 | 03 October 2019 |
| KR 10-2023-0046974 A | 06 April 2023 | WO 2023-054961 A1 | 06 April 2023 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- KR 1020220064080
- KR 1020210042969